(19) Europäisches Patentamt / European Patent Office / Office européen des brevets

(11) **EP 4 369 030 A1**

(12) **EUROPEAN PATENT APPLICATION**
published in accordance with Art. 153(4) EPC

(43) Date of publication:
**15.05.2024 Bulletin 2024/20**

(21) Application number: **21953693.5**

(22) Date of filing: **17.08.2021**

(51) International Patent Classification (IPC):
**G01S 7/481** (2006.01)    **G01S 17/88** (2006.01)
**G02B 26/10** (2006.01)

(52) Cooperative Patent Classification (CPC):
**G01S 7/481; G01S 17/88; G02B 26/10**

(86) International application number:
**PCT/CN2021/113080**

(87) International publication number:
**WO 2023/019442 (23.02.2023 Gazette 2023/08)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(71) Applicant: **Huawei Technologies Co., Ltd.
Longgang
Shenzhen, Guangdong 518129 (CN)**

(72) Inventors:
• **GUO, Jiaxing
  Shenzhen, Guangdong 518129 (CN)**
• **AN, Kai
  Shenzhen, Guangdong 518129 (CN)**
• **HAN, Wei
  Shenzhen, Guangdong 518129 (CN)**
• **QIU, Sunjie
  Shenzhen, Guangdong 518129 (CN)**
• **YU, Anliang
  Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **DETECTION SYSTEM, TERMINAL DEVICE AND DETECTION CONTROL METHOD**

(57)    A detection system, a terminal device, and a detection control method are provided, to resolve a problem of low detection accuracy of a detection system in the conventional technology, and are used in fields such as autonomous driving, intelligent driving, assisted driving, or networked vehicles. The detection system includes a transmit module, a receive module, a first scanning module, and a second scanning module. An included angle between a first normal vector of a first reflective surface of the first scanning module and a second normal vector of a second reflective surface of the second scanning module is a first angle greater than 0 degrees. The first reflective surface and the second reflective surface are adjacent reflective surfaces. An included angle between an optical axis of the transmit module and an optical axis of the receive module is a second angle greater than 0 degrees. The transmit module is configured to transmit signal light, the first scanning module is configured to reflect the received signal light, the second scanning module is configured to reflect, to the receive module, an echo signal obtained by reflecting the signal light by at least one target, and the receive module is configured to receive the echo signal. Based on this, detection accuracy of the detection system can be improved.

FIG. 3a

**Description**

**TECHNICAL FIELD**

This application relates to the field of detection technologies, and in particular, to a detection system, a terminal device, and a detection control method.

**BACKGROUND**

With the development of science and technology, intelligent terminals such as intelligent transportation devices, smart home devices, robots, and vehicles gradually enter daily lives of people. A detection system plays an increasingly important role in an intelligent terminal. The detection system can sense a surrounding environment, identify and track a moving target based on sensed environment information, identify a static scene such as a lane line or a sign, and perform path planning with reference to a navigator, map data, and the like. Therefore, the detection system plays an increasingly important role in the intelligent terminal.

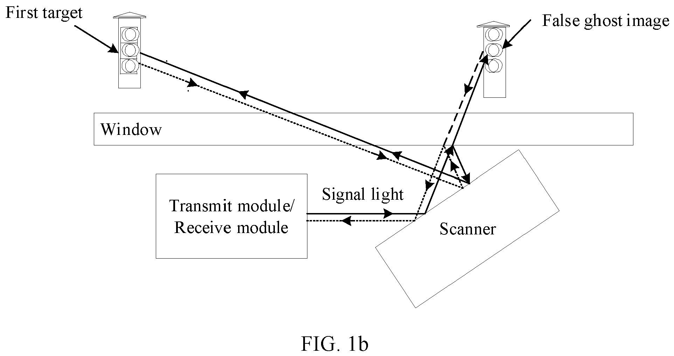

In an actual application scenario, when sensing a surrounding environment, the detection system inevitably encounters a target with high reflectivity or special reflectivity (referred to as angular reflectivity). For example, an indicative sign, a warning sign, and a road sign on a road, a safety post and a protective fence on a roadside, a convex mirror at a turn, a vehicle license plate, a high-reflectivity coating sticker on a vehicle body, and the like. These targets with high reflectivity or angular reflectivity generate strong scattered light, and the strong scattered light may affect a real echo signal. For example, the detection system may incorrectly detect a false ghost image of a target with high reflectivity or special reflectivity (angular reflectivity). For a specific optical path, refer to the following description of FIG. 1b. Therefore, detection accuracy of the detection system is reduced, and even the detection system may incorrectly determine a detection area.

In conclusion, how to improve accuracy of detecting the detection area by the detection system is a technical problem that needs to be urgently resolved currently.

**SUMMARY**

This application provides a detection system, a terminal device, and a detection control method, to maximize detection accuracy of the detection system.

According to a first aspect, this application provides a detection system. The detection system may include a transmit module, a receive module, a first scanning module, and a second scanning module. An included angle between a first normal vector of a first reflective surface of the first scanning module and a second normal vector of a second reflective surface of the second scanning module is a first angle greater than 0 degrees, the first reflective surface and the second reflective surface are adjacent reflective surfaces, and an included angle between an optical axis of the transmit module and an optical axis of the receive module is a second angle greater than 0 degrees. The transmit module is configured to transmit signal light, the first scanning module is configured to reflect the signal light from the transmit module, the second scanning module is configured to reflect a received echo signal to the receive module, the receive module is configured to receive the echo signal, and the echo signal includes reflected light obtained by reflecting the signal light by at least one target.

Based on this solution, the included angle between the first normal vector of the first reflective surface of the first scanning module and the second normal vector of the second reflective surface of the second scanning module is the first angle greater than 0 degrees, and the included angle between the optical axis of the transmit module and the optical axis of the receive module is the second angle greater than 0 degrees. Therefore, a signal light reflected by the first scanning module to a detection area for the first time may be parallel to an echo signal reflected by the second scanning module to the receive module for the first time to a greatest extent, so that the second scanning module reflects, to the receive module to a greatest extent, the echo signal obtained by reflecting the signal light reflected by the first scanning module to the detection area for the first time by a target (for example, a second target) in the detection area, and the second scanning module reflects, to an area outside the receive module to a greatest extent, an echo signal corresponding to a signal light reflected by the first scanning module not for the first time to a target (for example, a first target). In this way, the echo signal corresponding to the signal light reflected by the first scanning module not for the first time cannot be read by the detection system. This helps eliminate a false ghost image incorrectly detected by the detection system and improves detection accuracy of the detection system.

Herein, the included angle between the first normal vector of the first reflective surface of the first scanning module and the second normal vector of the second reflective surface of the second scanning module is the first angle. It may be understood that the included angle between the first normal vector of the first reflective surface of the first scanning module and the second normal vector of the second reflective surface of the second scanning module is a specified first angle, that is, the first scanning module and the second scanning module are fastened together, and are already relative to each other by the first angle in a direction of rotation around a scanning axis before rotating around the scanning axis. Alternatively, the first scanning module and the second scanning module are separated. To be specific, the first scanning module and the second scanning module may each rotate around a respective scanning axis. In a process in which the first scanning module and the second scanning module rotate around the respective scanning axis, the included angle between the first normal vector of the first reflective surface of the first scanning module and the second normal vector of the second reflective surface of the second scanning module always remains the first angle.

In a possible implementation, the detection system further includes a detection module. The second scanning module is configured to reflect, to the receive module, a first echo signal obtained by reflecting the signal light by the first target in the at least one target. The receive module is configured to propagate the first echo signal to a currently non-gated first area of the detection module or an area outside the detection module. Alternatively, the second scanning module is configured to reflect the first echo signal to the area outside the receive module.

The second scanning module propagates the first echo signal to the first area of the detection module or the area outside the receive module, so that the detection system cannot detect the first echo signal. This can eliminate a false ghost image caused by the first target.

In a possible implementation, the detection system further includes the detection module, the at least one target that can reflect the signal light further includes the second target in the detection area, and the second scanning module is configured to reflect, to the receive module, a second echo signal obtained by reflecting the signal light by the second target in the detection area. The receive module is configured to propagate the second echo signal to a currently gated second area in the detection module. The detection module is configured to perform optical-to-electrical conversion on a received second echo signal to obtain an electrical signal used to determine association information of the second target.

The second scanning module reflects the second echo signal to the receive module to a greatest extent, the receive module propagates the second echo signal to the currently gated second area in the detection module, and the currently gated second area in the detection module may perform optical-to-electrical conversion based on the second echo signal, so that the association information of the second target may be obtained based on the converted electrical signal.

In a possible implementation, the first scanning module and the second scanning module share a first scanning axis, and the first reflective surface and the second reflective surface are adjacent in a direction parallel to the first scanning axis.

The first scanning module and the second scanning module share the first scanning axis. This helps simplify assembly of the detection system, and can simplify control on rotation of the first scanning module and the second scanning module around the first scanning axis.

In a possible implementation, a scanning axis of the first scanning module is a second scanning axis, a scanning axis of the second scanning module is a third scanning axis, and a direction of the second scanning axis is parallel to a direction of the third scanning axis, or an extension line of the second scanning axis coincides with an extension line of the third scanning axis, and the first reflective surface and the second reflective surface are adjacent in a direction parallel to the second scanning axis or in a direction parallel to the third scanning axis.

The first scanning module and the second scanning module each rotate around the respective scanning axis. This helps improve flexibility of controlling the first scanning module and the second scanning module.

In a possible implementation, the second angle is twice the first angle.

The second angle is designed to be twice the first angle. A loss of the second echo signal is reduced to a greatest extent, and impact of a false ghost image caused by the first echo signal on detection accuracy of the detection system is reduced to a greatest extent.

In a possible implementation, the first scanning module includes any one of the following: a rotation mirror, a swing mirror, and a micro electro-mechanical system (micro electro-mechanical system, MEMS) mirror; and/or the second scanning module includes any one of the following: a mirror, a swing mirror, and an MEMS mirror.

In a possible implementation, the transmit module includes a light source array, and the detection module includes a pixel array. Further, optionally, the light source array gates light sources in a time division manner by column, and the pixel array gates pixels in a time division manner by column.

The light sources and corresponding pixels are gated in a time division manner by column, so that the detection system can realize a line-scanning and line-receiving mode.

In a possible implementation, the first area of the detection module is at least one column of non-gated pixels, and the second area is at least one column of gated pixels.

In a possible implementation, the first angle is greater than or equal to a first angular resolution of the detection system, and the first angular resolution is an angular resolution of the detection system in a direction corresponding to a column of the pixel array.

When the detection system scans by column, the first angle is set to be greater than or equal to the first angular resolution in the direction corresponding to the column of the pixel array of the detection system, so that it can be ensured to a greatest extent that the receive module transmits the first echo signal to the currently non-gated first area in the pixel array, to minimize the first echo signal entering the currently gated second area in the pixel array. This can eliminate impact of the false ghost image caused by the first echo signal.

In a possible implementation, the transmit module includes the light source array, and the detection module includes the pixel array. Further, optionally, the light source array gates light sources in a time division manner by row, and the pixel array gates pixels in a time division manner by row.

The light sources and corresponding pixels are gated in a time division manner by column, so that the detection system can realize the line-scanning and line-receiving mode.

In a possible implementation, the first area of the detection module is at least one row of non-gated pixels, and the second area is at least one row of gated pixels.

In a possible implementation, the first angle is greater than or equal to a second angular resolution of the detection system, and the second angular resolution is an angular resolution of the detection system in a direction corresponding to a row of the pixel array.

When the detection system scans by row, the first angle is set to be greater than or equal to the second angular resolution in the direction corresponding to the row of the pixel row of the detection system, so that it can be ensured to a greatest extent that the receive module transmits the first echo signal to the currently non-gated first area in the pixel row, to reduce the first echo signal entering the currently gated second area in the pixel array. This can eliminate impact of the false ghost image caused by the first echo signal to a greatest extent.

In a possible implementation, the detection system further includes a processing control module, configured to receive the electrical signal from the detection module, and determine the association information of the second target based on the electrical signal.

According to a second aspect, this application provides a terminal device. The terminal device includes the detection system according to any one of the first aspect or the implementations of the first aspect.

Further, optionally, the terminal device may further include a processor. The processor may be configured to receive the electrical signal from the detection system, and determine the association information of the second target based on the electrical signal; or the processor may receive the association information of the second target from the detection system, and perform path planning based on the association information of the second target.

In a possible implementation, the terminal device includes but is not limited to a vehicle, a smart home device, an intelligent manufacturing device, a robot, an unmanned aerial vehicle, an intelligent transportation device, a mapping device, or the like.

According to a third aspect, this application provides a detection control method. The method may be applied to a detection system. The detection system may include a transmit module, a receive module, a first scanning module, and a second scanning module. An included angle between a first normal vector of a first reflective surface of the first scanning module and a second normal vector of a second reflective surface of the second scanning module is a first angle greater than 0 degrees, the first reflective surface and the second reflective surface are adjacent reflective surfaces, and an included angle between an optical axis of the transmit module and an optical axis of the receive module is a second angle greater than 0 degrees. The method includes: controlling the transmit module to transmit signal light; controlling the first scanning module to reflect the signal light from the transmit module, where the signal light transmitted to a target may be reflected by at least one target to obtain an echo signal; and controlling the second scanning module to reflect a received echo signal to the receive module.

In a possible implementation, a first echo signal may be obtained by reflecting the signal light by a first target in the at least one target. The method includes: controlling the second scanning module to reflect the first echo signal to the receive module, or controlling the second scanning module to reflect the first echo signal to an area outside the receive module, where the first echo signal is propagated to a currently non-gated first area in the detection module by the receive module.

In a possible implementation, the at least one target further includes a second target located in the detection area, and a second echo signal may be obtained by reflecting the signal light by the second target in the detection area. The method includes controlling the second scanning module to reflect the second echo signal to the receive module. Further, the method further includes controlling the detection module to gate a second area, where the gated second area is used to perform optical-to-electrical conversion on the received second echo signal, to obtain an electrical signal used to determine association information of the second target.

In a possible implementation, the detection module includes a pixel array, and the method further includes controlling the pixel array to gate the second area by column, so that the gated second area is used to perform the optical-to-electrical conversion on the received second echo signal.

In a possible implementation, the transmit module includes a light source array, the detection module includes the pixel array, and the method further includes controlling the light source array to gate light sources in a time division manner by column. Correspondingly, the method further includes controlling the pixel array to gate the second area by column.

In a possible implementation, the transmit module includes the light source array, the detection module includes the pixel array, and the method further includes controlling the light source array to gate light sources in a time division manner by row. Correspondingly, the method further includes controlling the pixel array to gate the second area by row.

In a possible implementation, the method further includes determining the association information of the second target based on the electrical signal.

According to a fourth aspect, this application provides a control apparatus, where the control apparatus is configured to implement the method according to any one of the third aspect or the implementations of the third aspect, and includes corresponding functional modules, respectively configured to implement the steps in the foregoing method. A function may be implemented by hardware, or may be implemented by hardware executing corresponding software. The hardware or software includes one or more modules corresponding to the foregoing function.

In a possible implementation, the control apparatus is, for example, a chip, a chip system, or a logic circuit. For beneficial effects, refer to descriptions in the third aspect. Details are not described herein again. The control apparatus may include a transceiver module and a processing module. The processing module may be configured to support the control apparatus in performing a corresponding function in the method according to the third aspect. The transceiver module is configured to support interaction between the control apparatus and each functional module in the detection system. The transceiver module may be an independent receive module, an independent transmit module, a transceiver module integrating a receiving function and a sending function, or an interface circuit. Optionally, the control apparatus may further include a storage module. The storage module may be coupled to the processing module, and the storage module stores program instructions and the like that are necessary for the control apparatus.

According to a fifth aspect, this application provides a chip, including at least one processor and one interface circuit. Further, optionally, the chip may further include a memory. The processor is configured to execute a computer program or instructions stored in the memory, so that the chip performs the method according to any one of the third aspect or the possible implementations of the third aspect.

For technical effects that can be achieved in any one of the second aspect to the fifth aspect, refer to descriptions of beneficial effects in the first aspect. Details are not described herein again.

According to a sixth aspect, this application provides a computer-readable storage medium, where the computer-readable storage medium stores a computer program or instructions, and when the computer program or the instructions are executed by a control apparatus, the control apparatus is enabled to perform the method according to any one of the third aspect or the possible implementations of the third aspect.

According to a seventh aspect, this application provides a computer program product, where the computer program product includes a computer program or instructions, and when the computer program or the instructions are executed by a control apparatus, the control apparatus is enabled to perform the method according to any one of the third aspect or the possible implementations of the third aspect.

## BRIEF DESCRIPTION OF DRAWINGS

FIG. 1a is a schematic diagram of an architecture of a detection system in a conventional technology;
FIG. 1b is a top view of the detection system in the conventional technology;
FIG. 2 is a schematic diagram of a possible application scenario according to this application;
FIG. 3a is a schematic diagram of an architecture of a detection system according to this application;
FIG. 3b is a top view of a first scanning module and a second scanning module according to this application;
FIG. 3c is a schematic diagram of a location relationship between a transmit module and a receive module according to this application;
FIG. 4a is an optical path diagram of projecting signal light to a detection area by the first scanning module at different scanning angles according to this application;
FIG. 4b is a schematic diagram of a scanning track of the signal light reflected by the first scanning module in the detection area according to this application;
FIG. 4c is a schematic diagram of another scanning track of the signal light reflected by the first scanning module in the detection area according to this application;
FIG. 5a is a schematic diagram of a structure of a first scanning module and a second scanning module according to this application;
FIG. 5b is a schematic diagram of another structure of a first scanning module and a second scanning module according to this application;
FIG. 5c is a schematic diagram of another structure of a first scanning module and a second scanning module according to this application;
FIG. 6a is a schematic diagram of a structure of a light source array according to this application;

FIG. 6b is a schematic diagram of a structure of another light source array according to this application;

FIG. 6c is a schematic diagram of a structure of another light source array according to this application;

FIG. 7 is a schematic diagram of a structure of a transmit mirror group according to this application;

FIG. 8 is a schematic diagram of a structure of a transmit module according to this application;

FIG. 9 is a schematic diagram of a structure of a receive module according to this application;

FIG. 10a is a schematic diagram of a structure of a pixel array according to this application;

FIG. 10b is a schematic diagram of a structure of a pixel array according to this application;

FIG. 10c is a schematic diagram of a structure of a pixel array according to this application;

FIG. 11 is a schematic diagram of an architecture of another detection system according to this application;

FIG. 12a is a schematic diagram of an optical path based on a detection system according to this application;

FIG. 12b is a schematic diagram of another optical path based on a detection system according to this application;

FIG. 13 is a schematic diagram of a location of a lidar on a vehicle according to this application;

FIG. 14 is a schematic diagram of a structure of a terminal device according to this application;

FIG. 15 is a schematic flowchart of a detection control method according to this application;

FIG. 16 is a schematic diagram of a structure of a control apparatus according to this application; and

FIG. 17 is a schematic diagram of a structure of a control apparatus according to this application.

## DESCRIPTION OF EMBODIMENTS

The following describes in detail embodiments of this application with reference to accompanying drawings.

The following describes some terms in this application. It should be noted that the explanations are intended for ease of understanding by a person skilled in the art, but do not constitute a limitation on the protection scope claimed in this application.

(1) First target and second target

Energy (or strength) of a first echo signal obtained by reflecting received signal light by a first target is strong, and after the first echo signal passes through a long optical propagation path, remaining energy is still strong. In other words, when the first echo signal is propagated to a detector through the long optical propagation path, the detector may still detect the first echo signal. Energy of a second echo signal obtained by reflecting received signal light by a second target is weaker than the energy of the first echo signal, and after the second echo signal passes through a long optical propagation path, remaining energy is weak, and may even be ignored.

It should be noted that factors that affect the energy of the echo signal include but are not limited to a distance between a target and a detection system, a distribution status of the echo signal reflected by the target (for example, a target that is a Lambert body evenly reflects the received signal light in all directions, that is, the echo signal is evenly distributed in all directions), and reflectivity of the target.

For example, the first target may be a target that is close to the detection system; or the first target is a target that has high reflectivity; or the first target is a target that concentratedly reflects echo signals to the detection system; or the first target is a target that is close to the detection system and that has high reflectivity; or the first target is a target that is close to the detection system and that concentratedly reflects echo signals to the detection system; or the first target is a target that has high reflectivity and that concentratedly reflects echo signals to the detection system; or the first target is a target that is close to the detection system, has high reflectivity, and concentratedly reflects echo signals to the detection system. The target with the high reflectivity includes but is not limited to an indicative sign, a warning sign, and a road sign on a road, a safety post and a protective fence on a roadside, a convex mirror at a turn, a vehicle license plate, a high-reflectivity coating sticker on a vehicle body, and the like.

For example, if the first target and the second target have a same distance from the detection system, and reflect echo signals that are evenly distributed (for example, both are Lambert bodies), reflectivity of the first target is greater than reflectivity of the second target. For another example, if the first target and the second target have same reflectivity and reflect echo signals that are evenly distributed, the first target is closer to the detection system than the second target. For another example, if the first target and the second target have a same distance from the detection system and have same reflectivity, the first echo signals of the first target are more centralized in the direction toward the detection system (that is, the first echo signals are concentratedly distributed in the direction toward the detection system), the first echo signals are less distributed in another direction, the second echo signals of the second target are less distributed in the direction toward the detection system, or the second echo signals of the second target are evenly distributed in all directions. Details are not listed one by one herein.

(2) Normal vector of a reflective surface

A normal vector of a reflective surface is a vector represented by a straight line perpendicular to the reflective surface. There are countless normal vectors on the reflective surface. If the reflective surface is a plane, the countless normal vectors are parallel to each other.

(3) Angular resolution

An angular resolution may also be referred to as a scanning resolution, and is a minimum included angle between adjacent light beams transmitted to a detection area. A smaller angular resolution indicates a larger quantity of light spots transmitted to the detection area, that is, a larger quantity of points at which a target in the detection area can be detected, and higher detection definition. The angular resolution includes a vertical angular resolution and a horizontal angular resolution.

(4) Gated pixels

In a pixel array, a row address may be a horizontal coordinate, and a column address may be a vertical coordinate. In this application, an example in which a row of the pixel array corresponds to a horizontal direction and a column of the pixel array corresponds to a vertical direction is used for description. Data at a specified location in a memory may be extracted by using a row-column gating signal, and a pixel corresponding to the extracted specified location is a gated pixel. It should be understood that a pixel in the pixel array may store a detected signal in a corresponding memory.

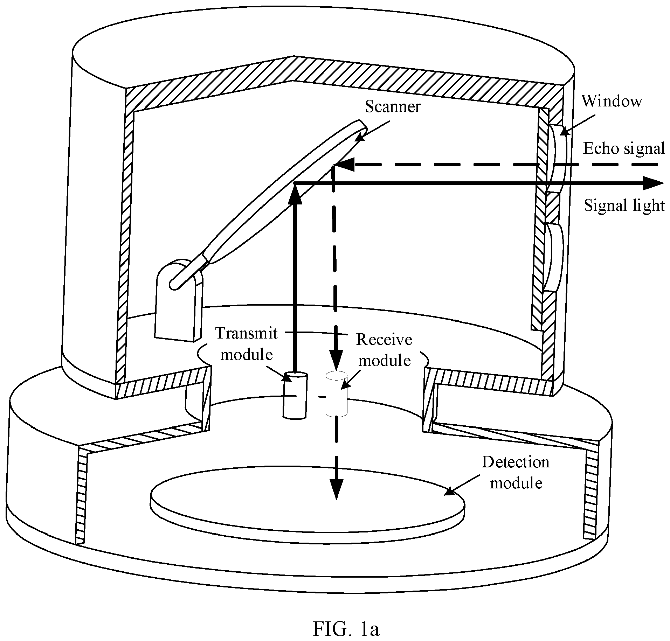

Based on the foregoing content, refer to a schematic diagram of a three-dimensional structure of a detection system in a conventional technology provided in FIG. 1a. The detection system includes a transmit module, a receive module, a scanner and a window. An optical axis of the receive module is parallel to an optical axis of the transmit module, that is, an included angle between the optical axis of the receive module and the optical axis of the transmit module is equal to 0 degrees. Both the transmit module and the receive module are located on a same side of the scanner, and the receive module and the transmit module share the scanner. It may also be understood that the scanner may be divided into a transmit area and a receive area. The transmit area of the scanner may reflect signal light from the transmit module to a detection area. The receive area of the scanner may reflect, to the receive module, an echo signal that is from the detection area and that is for the signal light. The window is configured to isolate impact of an external environment on the detection system.

FIG. 1b shows an example of a top view and an optical path diagram of the detection system shown in FIG. 1a. Based on the detection system, at a specific scanning angle, the signal light transmitted by the transmit module is transmitted to a reflective surface of the scanner, and is reflected to the window by the reflective surface of the scanner. Most of the signal light passes through the window to the detection area, to scan the detection area. However, because the signal light is unlikely to all pass through the window, a small part of the signal light is reflected back to the scanner by the window, is reflected again to the window by the reflective surface of the scanner, and then passes through the window. If the signal light that passes again is transmitted to the first target, because the first target has high reflectivity, the first target reflects the signal light to obtain a first echo signal with high strength. The first echo signal passes through the window to the scanner, and is reflected again to the window by the reflective surface of the scanner. A part of the first echo signal is reflected back to the scanner again by the window (it should be understood that herein, a part of the first echo signal further passes through the window, and because the part of the first echo signal passing through the window is irrelevant to this solution, details are not described herein), and reflected back to the receive module again by the reflective surface of the scanner. Further, the detection system may further include a detection module (as shown in FIG. 1a), and the receive module focuses, to the detection module, the first echo signal reflected back by the scanner. The detection module determines that the first echo signal is returned from a location of a false ghost image (based on a principle that light is propagated along a straight line). Actually, the first target does not exist at the location of the false ghost image, but the detection module incorrectly detects that the first target exists. This reduces accuracy of detecting the detection area by the detection system. It should be understood that both the signal light and the echo signal that are reflected on the reflective surface of the scanner comply with a reflection law of light.

In view of this, this application provides a detection system. The detection system can avoid to a greatest extent that the detection system receives spurious echo signals, to minimize impact of the spurious light on detection accuracy of the detection system. In particular, in a scenario in which the signal light transmitted by the detection system is reflected to the first target not for the first time by the scanning module, the detection system provided in this application helps avoid interference of the first target to accurate detection of the detection system to a greatest extent. This improves detection accuracy of the detection system.

The following describes some possible application scenarios of this application.

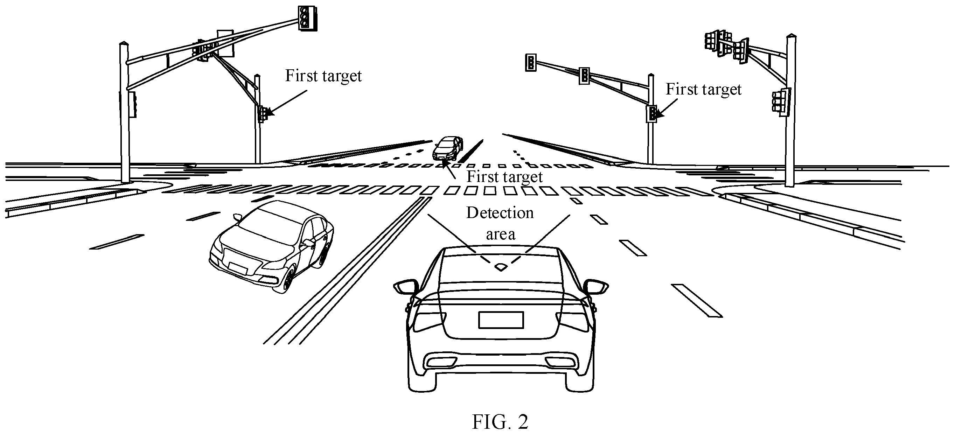

FIG. 2 shows an example of a schematic diagram of a possible application scenario of this application. In this application scenario, an example in which the detection system is installed on a vehicle and the vehicle travels on a road is used. The signal light transmitted by the detection system deployed on the vehicle may be transmitted to the first target after being reflected by the scanning module not for the first time (that is, an optical propagation path corresponding to the signal light transmitted to the first target is long). The first target is, for example, an indicative sign, a warning sign, and a road sign on a road, a safety post and a protective fence on a roadside, a convex mirror at a turn, a vehicle license plate, a high-reflectivity coating sticker on a vehicle body, and the like. For more detailed descriptions of the first target, refer to the foregoing related descriptions. Details are not described herein again. The vehicle may, for example, be an unmanned vehicle, an intelligent vehicle, an electric vehicle, a digital vehicle, or the like. FIG. 2 is an example in which the detection system is deployed in the front of the vehicle. The detection system may sense a sector area shown in a dashed box shown in FIG. 2, and the sector area may be referred to as a detection area (or a detection field of view) of the detection system. It should be understood that the detection system may alternatively be deployed at another location of the vehicle. For example, the detection system may alternatively be deployed in any one or more directions of rear, left, and right directions of the vehicle, to capture information about an environment around the vehicle. It should be noted that the first target may be located in the detection area of the detection system, or may be located in an area outside the detection area of the detection system.

In a possible implementation, the detection system may obtain, in real time or periodically, longitude and latitude, a speed, and an orientation of the vehicle, or association information (for example, a distance to the target, a moving speed of the target, a posture of the target, a grayscale image of the target, or the like) of a target (for example, the second target) in a specific range. The detection system or the vehicle may determine, for example, a location and/or path planning of the vehicle based on the association information. For example, the location of the vehicle is determined by using the longitude and the latitude. Alternatively, a traveling direction and a destination of the vehicle in a future period of time are determined by using the speed and the orientation. Alternatively, a quantity, a density, and the like of obstacles around the vehicle are determined by using a distance to a surrounding object. Further, optionally, assisted driving, self-driving, or the like of the vehicle may be implemented with reference to a function of an advanced driving assistance system (advanced driving assistant system, ADAS). It should be understood that a principle of detecting association information of a target by the detection system is as follows: The detection system transmits signal light in a specific direction. If a target (for example, the second target) exists in the detection area of the detection system, the target may reflect the received signal light back to the detection system (the reflected signal light may be referred to as an echo signal), and then the detection system determines the association information of the target based on the echo signal.

It should be noted that the foregoing application scenario is merely an example, and the detection system provided in this application may be further used in a plurality of other possible scenarios, but is not limited to the scenario shown in the foregoing example. For example, the detection system may be further installed on an unmanned aerial vehicle as an airborne radar. For another example, the detection system may be installed on an automated guided vehicle (automated guided vehicle, AGV), where the AGV is a transportation vehicle equipped with an electromagnetic or optical automatic navigation apparatus, capable of traveling along a specified navigation path, and having security protection and various load-moving functions. For another example, the detection system may also be used in scenarios such as remote medical treatment, remote training, multi-person game, and multi-person training. Details are not listed one by one herein. In addition, the first target provided above is merely an example, and the first target may alternatively be another target that meets the following condition: A strong first echo signal obtained by reflecting received signal light by the target still has high remaining energy after passing through a long optical propagation path.

It should be understood that the application scenario described in this application is intended to describe the technical solutions in this application more clearly, and does not constitute a limitation on the technical solutions provided in this application. A person of ordinary skill in the art may learn that with emergence of a new application scenario, the technical solutions provided in this application are also applicable to a similar technical problem.

Based on the foregoing content, the application scenario may be applied to a field such as unmanned driving, automatic driving, assisted driving, intelligent driving, networked vehicles, security monitoring, remote interaction, mapping, artificial intelligence, or the like.

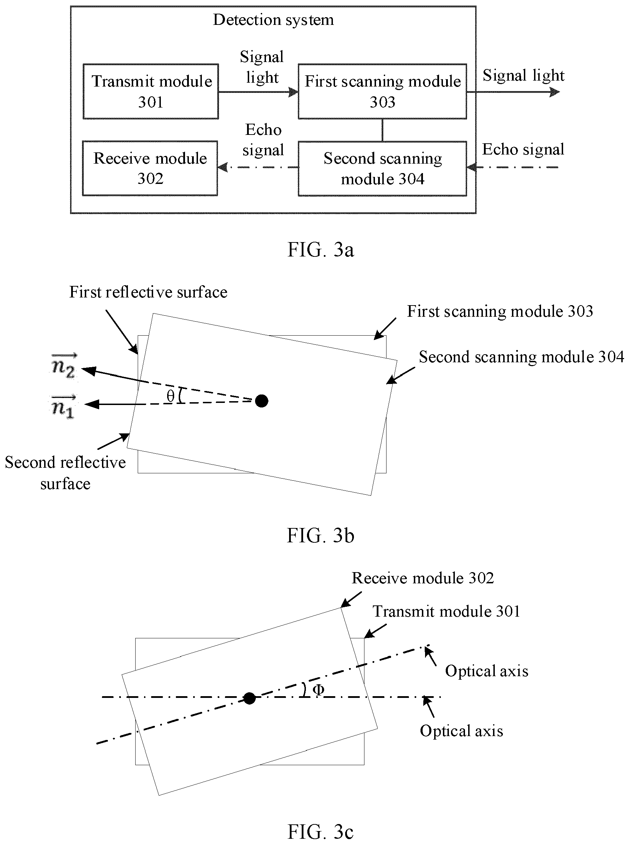

Based on the foregoing content, the following specifically describes the detection system provided in this application with reference to FIG. 3a to FIG. 13.

FIG. 3a is a schematic diagram of an architecture of a detection system according to this application. The detection system may include a transmit module 301, a receive module 302, a first scanning module 303, and a second scanning module 304. The transmit module 301 is configured to transmit signal light. The first scanning module 303 is configured to reflect the signal light from the transmit module 301, to scan the detection area. The second scanning module 304 is configured to reflect a received echo signal to the receive module 302, where the echo signal includes reflected light obtained by reflecting the signal light by at least one target. The receive module 302 is configured to receive the echo signal. It should be noted that reflection of the signal light on the reflective surface of the first scanning module and reflection of the echo signal on the reflective surface of the second scanning module both comply with a reflection law.

With reference to a top view of FIG. 3b, the architecture of the detection system provided in this application is further described. An included angle between a first normal vector $\overrightarrow{n_1}$ of a first reflective surface of the first scanning module 303 and a second normal vector $\overrightarrow{n_2}$ of a second reflective surface of the second scanning module 304 is a first angle θ greater than 0 degrees.

Refer to a top view of a location relationship between the transmit module and the receive module as shown in FIG. 3c. An included angle between an optical axis of the transmit module and an optical axis of the receive module is a second angle Φ greater than 0 degrees. For the optical axis of the transmit module and the optical axis of the receive module, refer to the following related descriptions. Details are not described herein. A person skilled in the art may learn that external shapes of the transmit module and the receive module are not specifically limited, provided that the included angle between the optical axis of the transmit module and the optical axis of the receive module meets the foregoing rule.

It should be noted that the foregoing description is provided by using an example in which appearance shapes of the first scanning module and the second scanning module are cuboids. It should be understood that the first scanning module and the second scanning module may alternatively be in another shape, for example, a cube or another possible polyhedron (for example, an octahedron or a hexahedron). This is not limited in this application.

Based on the foregoing detection system, the included angle between the first normal vector of the first reflective surface of the first scanning module and the second normal vector of the second reflective surface of the second scanning module is the first angle greater than 0 degrees, and the included angle between the optical axis of the transmit module and the optical axis of the receive module is the second angle greater than 0 degrees. In this way, a signal light reflected by the first scanning module to the detection area for the first time may be parallel to an echo signal reflected by the second scanning module to the receive module for the first time to a greatest extent, so that the second scanning module reflects, to the receive module to a greatest extent, the echo signal obtained by reflecting the signal light reflected by the first scanning module to the detection area for the first time by the target (for example, the second target) in the detection area, and the second scanning module reflects, to an area outside the receive module to a greatest extent, an echo signal corresponding to a signal light reflected by the first scanning module not for the first time to the target (for example, the first target). In this way, the echo signal corresponding to the signal light reflected by the first scanning module not for the first time cannot be read by the detection system. This helps eliminate a false ghost image incorrectly detected by the detection system and improves detection accuracy of the detection system. It should be understood that an optical propagation path of the signal light transmitted to the target by the first scanning module not for the first time is longer than an optical propagation path of the signal light reflected to the target by the first scanning module for the first time.

In a possible implementation, the second angle Φ=2×the first angle θ. For example, the first angle is equal to 2 degrees, and the second angle is equal to 4 degrees. Based on a value relationship between the first angle and the second angle, a loss of the second echo signal is reduced to a greatest extent, and impact of a false ghost image caused by the first echo signal on detection accuracy of the detection system is reduced to a greatest extent.

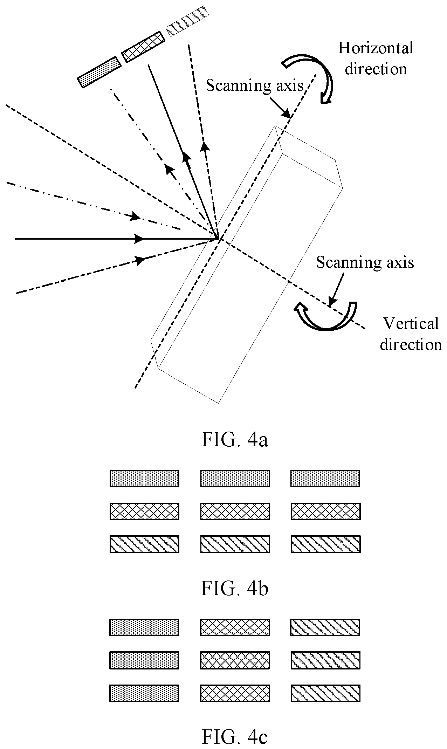

In a possible implementation, when the first scanning module and the second scanning module scan in a horizontal direction, that is, the signal light from the transmit module is projected to the detection area in the horizontal direction (for a light spot projected to the detection area, refer to the following FIG. 4b), the first angle is greater than or equal to a horizontal angular resolution of the detection system. Based on this, the horizontal angular resolution of the detection system may be controlled in the horizontal direction by controlling a scanning angle of the first scanning module, and the angular resolution in a vertical direction is an included angle between two adjacent beams of the signal light. When the first scanning module and the second scanning module scan in a vertical direction, that is, the signal light from the transmit module is projected to the detection area in the vertical direction (for the light spot projected to the detection area, refer to the following FIG. 4c), the first angle is greater than or equal to a vertical angular resolution. Based on this, the vertical angular resolution of the detection system may be controlled in the vertical direction by controlling the scanning angle of the first scanning module, and the angular resolution in a horizontal direction is an included angle between two adjacent beams of the signal light. The first scanning angle of the first scanning module may be preset. It should be noted that the horizontal angular resolution may be the same as or different from the vertical angular resolution. This is not limited in this application.

The following separately describes the functional modules shown in FIG. 3a to FIG. 3c, to provide an example of a specific implementation solution. For ease of description, no reference numerals are added to the first scanning module, the second scanning module, the transmit module, and the receive module in the following.

1. First scanning module and second scanning module

In a possible implementation, the first scanning module corresponds to the transmit module, and is configured to reflect the signal light from the transmit module. Specifically, the scanning angle of the first scanning module is changed to change a propagation direction of the signal light from the transmit module, so that the signal light is reflected to the detection area in different directions. To be specific, the first scanning module is at a scanning angle, and may reflect the signal light to the detection area in a direction. The first scanning module at different scanning angles may reflect the signal light to the detection area in different directions, to scan the detection area. The first scanning module may change the scanning angle in a dimension (a horizontal direction shown in FIG. 4a or a vertical direction shown in FIG. 4a), and project the signal light from the transmit module to the detection area at each scanning angle. In FIG. 4a, an example in which the first scanning module reflects the signal light to the detection area at three different scanning angles is used. A line type represents the signal light reflected by the first scanning module at a scanning angle, and a filling pattern represents a light spot of the signal light reflected by the first scanning module to the detection area at a scanning angle. For example, if the first scanning module rotates around a scanning axis in the horizontal direction to change the scanning angle, the signal light may be reflected to the detection area in different directions, and a scanning track shown in FIG. 4b may be obtained in the detection area. If the first scanning module rotates around a scanning axis in the vertical direction to change the scanning angle, the signal light may be reflected to the detection area in different directions, and a scanning track shown in FIG. 4c may be obtained in the detection area.

It should be understood that the light spots projected to the detection area may be close to each other, or may be little spaced from each other (as shown in FIG. 4b or FIG. 4c). This is not limited in this application. In addition, an example in which a shape of the light spot is a rectangle is used in this example. The shape of the light spot is not limited in this application. For example, the shape of the light spot may be a circle, an ellipse, another regular or irregular shape, or the like.

Generally, an optical transmit path and an optical receive path are two isolated optical paths. In other words, the optical transmit path and the optical receive path do not affect each other. In a possible implementation, the second scanning module corresponds to the receive module, and is configured to reflect the received echo signal to the receive module. Specifically, the scanning angle of the second scanning module is changed, so that the received second echo signals in different directions (that is, from the detection area) may be reflected to the receive module, and the received first echo signal may be reflected to an area outside the receive module or reflected to the receive module.

It should be noted that the first scanning module and the second scanning module may rotate in a continuous operation mode, or may rotate in a stepping operation mode. This is not limited in this application. In actual application, a specific rotation mode may be preset.

In a possible implementation, the signal light is reflected by the first scanning module at least twice and then is transmitted to the first target, and an orientation to which the signal light reflected by the first scanning module at least twice points is different from an orientation to which the signal light reflected by the first scanning module once points. It may also be understood that the signal light transmitted to the first target is at least the signal light passing through the window for the second time, and an orientation to which the signal light passing through the window for the second time points is different from an orientation to which the signal light passing through the window for the first time points. The first target may reflect the received signal light to obtain the first echo signal. The included angle between the first normal vector of the first reflective surface of the first scanning module and the second normal vector of the second reflective surface of the second scanning module is the first angle $\theta$ greater than 0 degrees. Therefore, when the first angle $\theta$ is small, the second scanning module may reflect the first echo signal to the receive module. Further, the receive module may propagate the first echo signal to a currently non-gated first area in the detection module or propagate the first echo signal to an area outside the detection module. For specific content, refer to the following description of the receive module. Details are not described herein. When the first angle $\theta$ is large, the second scanning module may reflect the first echo signal to the area outside the receive module. It should be understood that a larger first angle $\theta$ indicates fewer first echo signals entering the receive module or even no first echo signals entering the receive module. Therefore, a larger first angle $\theta$ indicates a stronger capability of the detection system to suppress a false ghost image.

In another possible implementation, the at least one target may further include a second target located in the detection area of the detection system, and the second target and the first target are located at different locations. The signal light is reflected by the first scanning module for the first time and then is transmitted to the second target. In other words, the signal light passes through the window for the first time and then is transmitted to the second target. The second target may reflect the received signal light to obtain the second echo signal. The second scanning module reflects the second echo signal to the receive module. Further, the receive module propagates the received second echo signal to a currently gated second area in the detection module. For specific content, refer to the following description of the receive module. Details are not described herein. It should be understood that the second target may exist in the detection area, or the second target may not exist in the detection area. The first target may be located in the detection area of the detection system, or may be located in the area outside the detection area of the detection system.

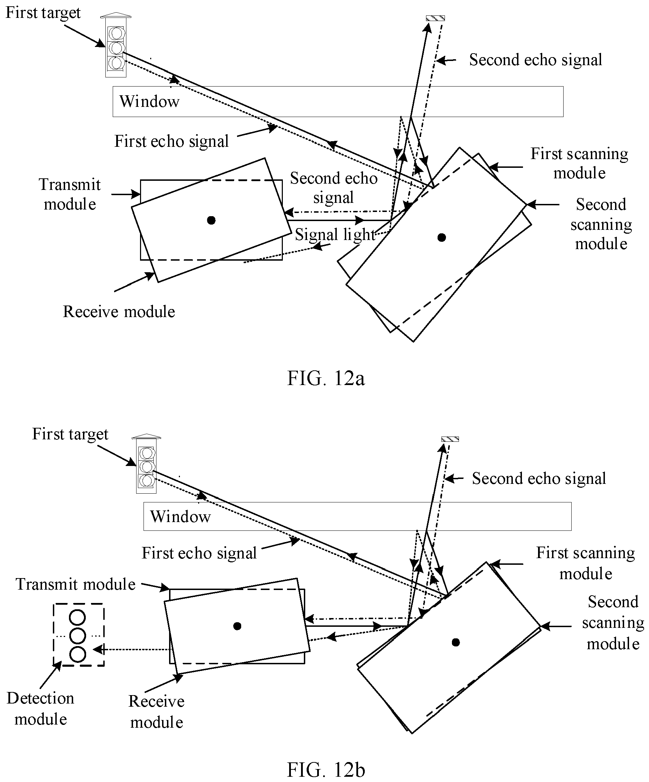

For example, optical paths of the signal light, the first echo signal, and the second echo signal are described in detail with reference to the following FIG. 12a or FIG. 12b. The signal transmitted by the transmit module is reflected by the first scanning module for the first time and then is transmitted to the window. Most of the signal light passes through the window and then is transmitted to the second target in the detection area. The second target reflects the received signal light to obtain the second echo signal. The second echo signal is reflected to the receive module by the second scanning module. The included angle between the first normal vector of the first reflective surface of the first scanning module and the second normal vector of the second reflective surface of the second scanning module is set to be the first angle greater than 0 degrees, and the included angle between the optical axis of the transmit module and the optical axis of the receive module is the second angle greater than 0 degrees, so that the second echo signal received by the receive module is parallel to the signal light transmitted by the transmit module. In this way, the second echo signal can enter the receive module to a greatest extent. Further, the second echo signal is propagated by the receive module to a currently gated area in the detection module. Some of the signal light transmitted to the window is reflected to the first scanning module, is reflected to the window again by the first scanning module, and passes through the window and then is transmitted to the first target. The first target reflects the received signal light to obtain the first echo signal. The first echo signal is reflected by the second scanning module to the receive module or the area outside the receive module. For the first echo signal reflected to the receive module, because the included angle between the first normal vector of the first reflective surface of the first scanning module and the second normal vector of the second reflective surface of the second scanning module is set to be the first angle greater than 0 degrees, and the included angle between the optical axis of the transmit module and the optical axis of the receive module is the second angle greater than 0 degrees, the second echo signal received by the receive module is parallel to the signal light transmitted by the transmit module. Therefore, the first echo signal received by the receive module is no longer parallel to the signal light transmitted by the transmit module. Therefore, the first echo signal received by the receive module is no longer transmitted to the currently gated area in the detection module. If the first angle is large, the first echo signal received by the receive module may even be transmitted to the area outside the detection module.

The following describes two cases based on whether the first scanning module and the second scanning module share a scanning axis.

Case 1: The first scanning module and the second scanning module share a scanning axis.

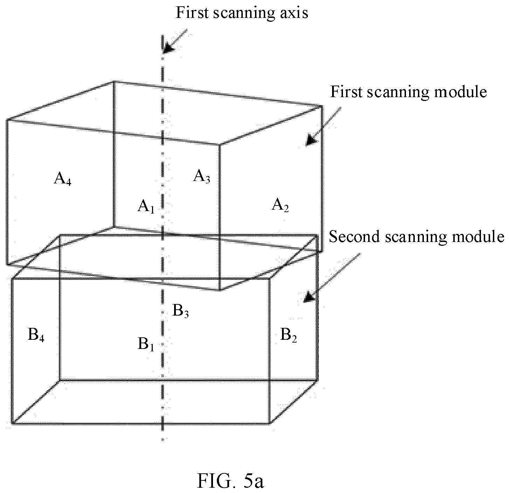

In a possible implementation, the first scanning module and the second scanning module share a first scanning axis. In other words, both the first scanning module and the second scanning module rotate around the first scanning axis. FIG. 5a is a possible example in which both the first scanning module and the second scanning module rotate around the first scanning axis.

Based on the case 1, the included angle between the first normal vector of the first reflective surface of the first scanning module and the second normal vector of the second reflective surface of the second scanning module is the first angle. It may be understood that the first included angle between the first normal vector of the first reflective surface of the first scanning module and the second normal vector of the second reflective surface of the second scanning module is preset (for example, when the detection system is delivered from a factory). In other words, the first scanning module and the second scanning module are fastened together (for example, glued or integrally molded), and are already relative to each other by the first angle in a direction of rotation around the first scanning axis. Further, optionally, the first scanning module and the second scanning module may be controlled to rotate synchronously around the first scanning axis. For example, the first scanning module and the second scanning module may be driven to rotate around the first scanning axis by using a motor, so that the first scanning module and the second scanning module are at different scanning angles. The first scanning module and the second scanning module share the first scanning axis. This helps simplify assembly of the detection system, and can simplify control on rotation of the first scanning module and the second scanning module around the first scanning axis.

Refer to the foregoing FIG. 5a. Based on the case 1, that the first reflective surface is adjacent to the second reflective surface means that the first reflective surface is adjacent to the second reflective surface in a vertical direction parallel to the first scanning axis; or it may be understood that the first reflective surface is adjacent to the second reflective surface in a vertical direction of the first scanning axis. For example, the first scanning module includes four first reflective surfaces (a reflective surface $A_1$, a reflective surface $A_2$, a reflective surface $A_3$, and a reflective surface $A_4$), and the second scanning module includes four second reflective surfaces (a reflective surface $B_1$, a reflective surface $B_2$, a reflective surface $B_3$, and a reflective surface $B_4$). The four first reflective surfaces are in a one-to-one correspondence with the four second reflective surfaces. The first reflective surface $A_1$ and the second reflective surface $B_1$ are adjacent reflective surfaces. The included angle between the first normal vector $\vec{n_1}$ of the first reflective surface $A_1$ and the second normal vector $\vec{n_2}$ of the second reflective surface $B_1$ is the first angle $\theta$. The first reflective surface $A_2$ and the second reflective surface $B_2$ are adjacent reflective surfaces. The included angle between the first normal vector $\vec{n_1}$ of the first reflective surface $A_2$ and the second normal vector $\vec{n_2}$ of the second reflective surface $B_2$ is the first angle $\theta$. The first reflective surface $A_3$ and the second reflective surface $B_3$ are adjacent reflective surfaces. The included angle between the first normal vector $\vec{n_1}$ of the first reflective surface $A_3$ and the second normal vector $\vec{n_2}$ of the second reflective surface $B_3$ is the first angle $\theta$. The first reflective surface $A_4$ and the second reflective surface $B_4$ are adjacent reflective

surfaces. The included angle between the first normal vector $\overrightarrow{n_1}$ of the first reflective surface $A_4$ and the second normal vector $\overrightarrow{n_2}$ of the second reflective surface $B_4$ is the first angle $\theta$.

It should be noted that the first reflective surface and the second reflective surface that are adjacent to each other are a group of corresponding reflective surfaces. For example, if the transmit module and the receive module are on a same side of the scanning module, in an operating state, the first reflective surface is configured to reflect the signal light from the transmit module, and the second reflective surface adjacent to the first reflective surface may be configured to reflect the echo signal that is from the detection area and that corresponds to the signal light. As shown in the foregoing FIG. 5a, in some operating scenarios, the signal light is reflected by the first reflective surface $A_1$, and correspondingly, the echo signal corresponding to the signal light is reflected by the second reflective surface $B_1$. In addition, a person skilled in the art may learn that in FIG. 5a, the surface $A_1$ and the surface $B_4$ may also be adjacent in the direction of the first scanning axis. Due to existence of the first angle, $A_1$ may be indeed adjacent to a plurality of surfaces in the direction of the first scanning axis. However, for clear and non-redundant description of the solution, in this application, only the first reflective surface $A_1$ of the first scanning module and the second reflective surface $B_1$ of the second scanning module are referred to as adjacent reflective surfaces. Similarly, the first reflective surface $A_2$ of the first scanning module and the second reflective surface $B_2$ of the second scanning module are referred to as adjacent reflective surfaces, the first reflective surface $A_3$ of the first scanning module and the second reflective surface $B_3$ of the second scanning module are referred to as adjacent reflective surfaces, and the first reflective surface $A_4$ of the first scanning module and the second reflective surface $B_4$ of the second scanning module are referred to as adjacent reflective surfaces.

Case 2: The first scanning module and the second scanning module do not share a scanning axis.

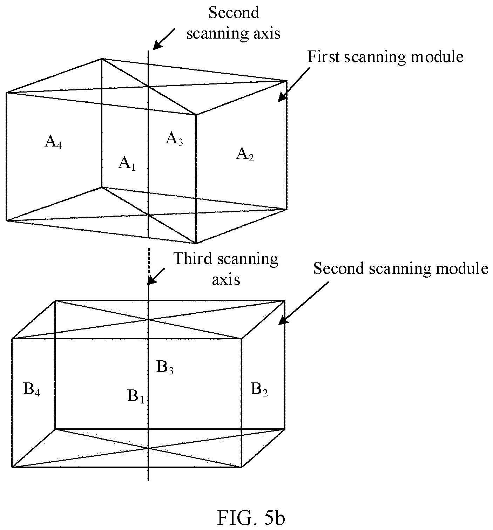

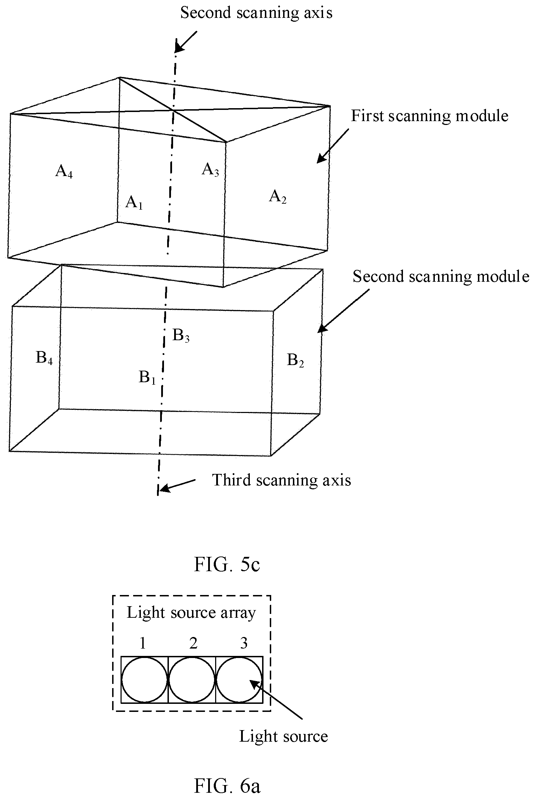

In a possible implementation, the scanning axis of the first scanning module is a second scanning axis, and the scanning axis of the second scanning module is a third scanning axis. An extension line of the second scanning axis coincides with an extension line of the third scanning axis (as shown in FIG. 5b), or a direction of the second scanning axis is parallel to but does not coincide with a direction of the third scanning axis (as shown in FIG. 5c). In a rotation process of the first scanning module and the second scanning module, the included angle between the first normal vector of the first reflective surface of the first scanning module and the second normal vector of the second reflective surface of the second scanning module is the first angle $\theta$.

Based on the case 2, the included angle between the first normal vector of the first reflective surface of the first scanning module and the second normal vector of the second reflective surface of the second scanning module is the first angle $\theta$. It may also be understood that the first scanning module and the second scanning module are separated, and in a process in which the first scanning module rotates around the second scanning axis and the second scanning module rotates around the third scanning axis, the included angle between the first normal vector of the first reflective surface of the first scanning module and the second normal vector of the second reflective surface of the second scanning module is always kept as the first angle $\theta$.

Further, optionally, the first scanning module and the second scanning module rotate in a same direction (for example, both rotate clockwise or both rotate anticlockwise). An angle at which the first scanning module rotates around the second scanning axis may be controlled to be always greater by the first angle $\theta$ than an angle at which the second scanning module rotates around the third scanning axis; or an angle at which the first scanning module rotates around the second scanning axis may be controlled to be always less by the first angle $\theta$ than an angle at which the second scanning module rotates around the third scanning axis. For example, both the first scanning module and the second scanning module rotate in the stepping operation mode. If the included angle between the first normal vector of the first reflective surface of the first scanning module and the second normal vector of the second reflective surface of the second scanning module is 0 degrees before rotation starts, a rotation angle of the first scanning module is $\alpha$, and a rotation angle of the second scanning module is $\alpha \pm \theta$. If the included angle between the first normal vector of the first reflective surface of the first scanning module and the second normal vector of the second reflective surface of the second scanning module is $\beta$, the rotation angle of the first scanning module is $\alpha$, and the rotation angle of the second scanning module is $\alpha \pm (\theta - \beta)$. It should be understood that the foregoing specific rotation manners of the first scanning module and the second scanning module are merely examples, or may be a rotation manner in which another included angle between the first normal vector of the first reflective surface of the first scanning module and the second normal vector of the second reflective surface of the second scanning module may be implemented as the first angle $\theta$. This is not limited in this application.

As shown in the foregoing FIG. 5b or FIG. 5c, the first reflective surface and the second reflective surface are adjacent in a direction parallel to the second scanning axis or in a direction parallel to the third scanning axis. For example, the first scanning module includes four first reflective surfaces (a reflective surface $A_1$, a reflective surface $A_2$, a reflective surface $A_3$, and a reflective surface $A_4$), and the second scanning module includes four second reflective surfaces (a reflective surface $B_1$, a reflective surface $B_2$, a reflective surface $B_3$, and a reflective surface $B_4$). The four first reflective surfaces are in a one-to-one correspondence with the four second reflective surfaces. The first reflective surface $A_1$ and

the second reflective surface $B_1$ are adjacent reflective surfaces. The included angle between the first normal vector $\overrightarrow{n_1}$ of the first reflective surface $A_1$ and the second normal vector $\overrightarrow{n_2}$ of the second reflective surface $B_1$ is the first angle $\theta$. The first reflective surface $A_2$ and the second reflective surface $B_2$ are adjacent reflective surfaces. The included angle between the first normal vector $\overrightarrow{n_1}$ of the first reflective surface $A_2$ and the second normal vector $\overrightarrow{n_2}$ of the second reflective surface $B_2$ is the first angle $\theta$. The first reflective surface $A_3$ and the second reflective surface $B_3$ are adjacent reflective surfaces. The included angle between the first normal vector $\overrightarrow{n_1}$ of the first reflective surface $A_3$ and the second normal vector $\overrightarrow{n_2}$ of the second reflective surface $B_3$ is the first angle $\theta$. The first reflective surface $A_4$ and the second reflective surface $B_4$ are adjacent reflective surfaces. The included angle between the first normal vector $\overrightarrow{n_1}$ of the first reflective surface $A_4$ and the second normal vector $\overrightarrow{n_2}$ of the second reflective surface $B_4$ is the first angle $\theta$. For an adjacent relationship between the first reflective surface and the second reflective surface, refer to the foregoing related descriptions. Details are not described herein again.

In a possible implementation, the first scanning module may, for example, be one of the following: a rotation mirror, an MEMS mirror, or a swing mirror. The second scanning module may also, for example, be one of the following: the rotation mirror, the MEMS mirror, or the swing mirror. By using a principle of geometric optics (for example, a reflection law) to scan the detection area, a large scanning field of view and high scanning efficiency are achieved.

It should be noted that types of the first scanning module and the second scanning module are not limited in this application. Any structure that can reflect the signal light transmitted by the transmit module and reflect the echo signal to the receive module or the area outside the receive module may be used. In addition, specific forms of the rotation mirror, the MEMS mirror, and the swing mirror are not limited in this application either.

For example, the first scanning module may be the rotation mirror, and the second scanning module is also the rotation mirror. For another example, the first scanning module may be the swing mirror, and the second scanning module is also the swing mirror. For another example, the first scanning module may be the MEMS mirror, and the second scanning module is also the MEMS mirror. For another example, the first scanning module may be the rotation mirror, and the second scanning module is also the MEMS mirror. For another example, the first scanning module may be the rotation mirror, and the second scanning module is also the swing mirror. For another example, the first scanning module may be the MEMS mirror, and the second scanning module is the rotation mirror. For another example, the first scanning module may be the MEMS mirror, and the second scanning module is also the swing mirror. Details are not listed one by one herein.

2. Transmit module

In a possible implementation, the transmit module is configured to transmit signal light. The signal light may be a linear light beam. Further, optionally, the transmit module may include a light source component and a transmit mirror group.

For ease of solution description, in the accompanying drawings, the signal light is described by using an example in which the linear light beam is a 3-line light beam. It should be understood that a quantity of linear light beam in this application may be greater than 3, or may be less than 3. The 3-line light beam means that the transmit module transmits three beams of the signal light at a time, and the three beams of the signal light are arranged into one line.

The following uses an example in which the light source component is a light source array, and shows possible structures of three light source components.

In a structure 1, the light source component is the light source array, the light source array includes one row and L columns of light sources, and L is an integer greater than 1.

FIG. 6a is a schematic diagram of a structure of a light source component according to this application. In FIG. 6a, L=3 is used as an example, that is, the light source array includes $1\times3$ light sources. Specifically, the one-row and three-column light sources may be gated at a time, and the gated one-row and three-column light sources may transmit three beams of the signal light, that is, the 3-line signal light.

In a structure 2, the light source component includes the light source array, the light source array includes K rows and one column of light sources, and K is an integer greater than 1.

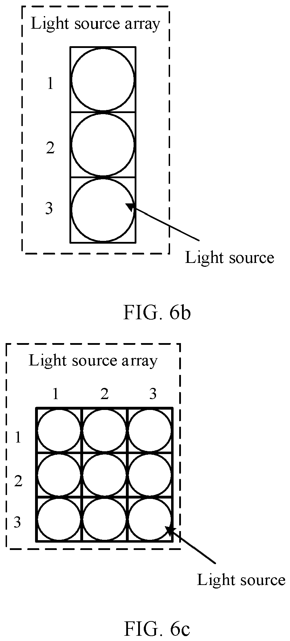

FIG. 6b is a schematic diagram of a structure of another light source component according to this application. In FIG. 6b, K=3 is used as an example, that is, the light source array includes $3\times1$ light sources. Specifically, the three-row and one-column light sources may be gated at a time, and the gated three-row and one-column light sources may transmit three beams of the signal light, that is, the 3-line signal light.

In a structure 3, the light source component includes the light source array, the light source array includes M rows and N columns, and both M and N are integers greater than 1.

FIG. 6c is a schematic diagram of a structure of still another light source array according to this application. In FIG. 6c, M=3 and N=3 are used as an example, that is, the light source array includes $3\times3$ light sources. In a possible implementation, the light source array may gate light sources in a time division manner by row or a time division manner by column. Gating light sources in a time division by row means gating at least one row of light sources in the light source array at a same moment. Gating light sources in a time division by column means gating at least one column of light sources in the light source array at a same moment. In other words, a row of light sources gated by row may be one row of light sources or may be a plurality of rows of light sources, and a column of light sources gated by column may be one column of light sources or may be a plurality of columns of light sources. This is not limited in this application. For example, one row of light sources is gated at a same moment. A first row of light sources in the light source array is gated at a first moment, a second row of light sources in the light source array is gated at a second moment, a third row of light sources in the light source array is gated at a third moment, and a row of light sources gated at each moment transmits the signal light. For example, one column of light sources is gated at a same moment. A first column of light sources in the light source array is gated at a first moment, a second column of light sources in the light source array is gated at a second moment, a third column of light sources in the light source array is gated at a third moment, and a column of light sources gated at each moment transmits the signal light. It should be understood that for the light source array, only one specific row or one specific column may be gated.

It should be noted that the foregoing provided shape of the light sources is merely an example, and this is not limited in this application. For example, the shape of the light sources may be a square, an ellipse, or another possible shape.

In a possible implementation, the light sources in the light source array may, for example, be a vertical cavity surface emitting laser (vertical cavity surface emitting laser, VCSEL), an edge emitting laser (edge emitting laser, EEL), a diode pumped solid state laser (diode pumped solid state laser, DPSS), an optical fiber laser, or the like. The light sources in the light source array may implement independent addressing. The independent addressing means that the light sources in the light source array may be independently gated (or referred to as lightened, turned on, or powered on), and the gated light sources may be configured to transmit the signal light. An addressing manner of the light source array is related to a physical connection relationship of the light sources. For example, if light sources in a same column in the light source array are connected in series, and light sources in different columns are connected in parallel, the light sources may be gated column by column. For another example, if light sources in a same row of the light source array are connected in series, and light sources in different rows are connected in parallel, the light sources may be gated row by row. For still another example, if the light sources in the light source array are connected in parallel, the light sources may be gated in any manner (for example, by point or by region of interest).

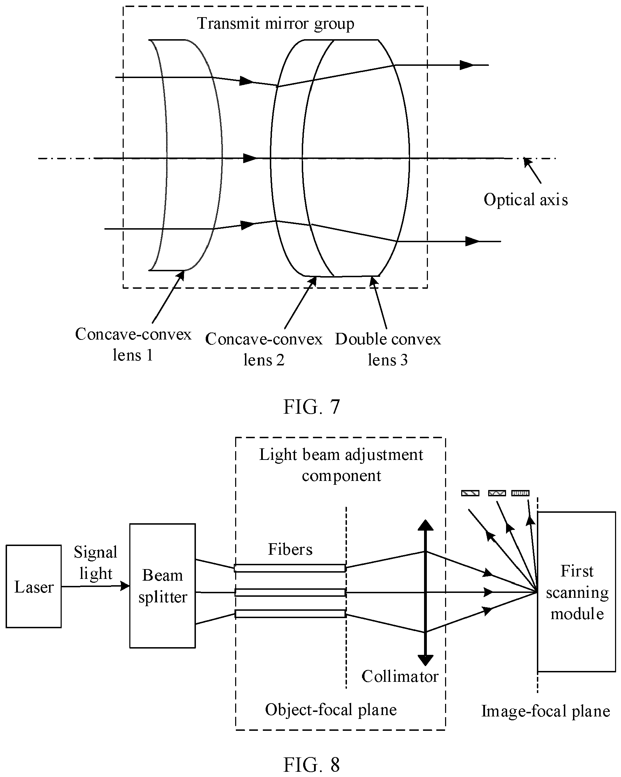

Based on the foregoing light source array, the transmit module may further include the transmit mirror group, to shape and/or collimate and/or homogenize the signal light transmitted by the light source array. FIG. 7 is a schematic diagram of a structure of the transmit mirror group according to this application. The transmit mirror group is configured to: shape and/or collimate and/or homogenize the signal light transmitted by the light source array, and reflect, to the detection area by using the first scanning module, signal light obtained through shaping and/or collimating and/or homogenizing. It should be understood that the signal light obtained through shaping and/or collimating and/or homogenizing is the linear light beam. The transmit mirror group includes at least one transmit mirror. The transmit mirror may, for example, be a lens. FIG. 7 is an example in which the transmit mirror group includes three lenses: a concave-convex lens 1, a concave-convex lens 2, and a double convex lens 3 in sequence. The optical axis of the transmit module is a straight line that passes through a sphere center of each lens shown in FIG. 7.

It should be noted that a quantity of transmit mirrors included in the transmit mirror group is not limited in this application, and may be greater than or less than the quantity in FIG. 7. In addition, a type of the transmit mirror is not limited in this application. The transmit mirror may alternatively include another lens or a combination of another lens, for example, a flat convex lens, a flat concave lens, or the like. In addition, the transmit mirror group may be rotatively symmetrical about an optical axis of the transmit mirror group. For example, the transmit mirror in the transmit mirror group may be a single spherical lens, or may be a combination of a plurality of spherical lenses. Alternatively, the transmit mirror group may be non-rotatively symmetrical. For example, the transmit mirror in the transmit mirror group may be a single aspherical lens, or may be a combination of a plurality of aspherical lenses. A combination of the plurality of spherical lenses and/or aspherical lenses helps improve imaging quality of the transmit mirror group and reduce aberration of the transmit mirror group.

In a possible implementation, the transmit mirror in the transmit mirror group may be made of an optical material such as glass, resin, crystal, or the like. When the transmit mirror is made of resin, mass of the detection system is reduced. When the transmit mirror is made of glass, imaging quality of the detection system is further improved. Further, to effectively suppress temperature drift, the transmit mirror group includes at least one transmit mirror made of a glass material.

FIG. 8 is a schematic diagram of a structure of another transmit module according to this application. The transmit module includes Q lasers and a light beam adjustment component, and Q is a positive integer. Further, optionally, the transmit module may further include a beam splitter. For ease of solution description, Q=1 is used as an example, the laser is configured to transmit signal light, the beam splitter may split the signal light transmitted by the laser into P beams, that is, P beams of the signal light, and propagate the P beams of the signal light to the light beam adjustment component, where P is an integer greater than 1. The light beam adjustment component is configured to: collimate and/or arrange the P beams of the signal light, adjust an angle between two adjacent beams of the signal light, and propagate the P beams of the signal light to the first scanning module. It should be understood that when Q=P, the transmit module may not include the beam splitter. In FIG. 8, Q=1 and P=3 are used as an example.

The beam splitter may, for example, be a diffractive optical element (diffractive optical element, DOE). The DOE may evenly divide a beam (that is, a single line) of the signal light from the laser into P beams, and propagation directions of the P beams of the signal light may be different or may be the same. The light beam adjustment component includes P optical fibers (that is, optical waveguides) and a collimator. The P optical fibers are in a one-to-one correspondence with the P beams of the signal light, that is, one beam of the signal light may be coupled into one optical fiber. Each of the P optical fibers is configured to receive corresponding signal light from the beam splitter, and transmit the received signal light to the collimator. The collimator is configured to receive the P beams of the signal light from the P optical fibers, and shape and/or collimate the P beams of the signal light to obtain the linear light beam (that is, a P line). Further, light outlets of the P optical fibers are all located on an object-focal plane of the collimator. Both an image-focal plane and the object-focal plane are focal planes corresponding to the collimator. For example, the collimator may be a collimating lens. Spacings between the optical fibers in the P optical fibers may be equal, or may be unequal. For example, when the spacings between the optical fibers are equal, included angles between any two adjacent beams of the signal light in the P beams of the signal light are equal. When the spacings between the optical fibers are unequal, the included angles between adjacent beams of the signal light in the P beams of the signal light are also unequal. A spacing d between optical fibers, a focal length f of the collimator, and the included angle $\theta$ between two adjacent beams of the signal light satisfy the following formula (1):

$$\theta=\arctan(d/f) \hspace{4cm} \text{Formula (1)}$$

Because light spots of the P beams of the signal light transmitted from the collimator coincide on the image-focal plane of the collimator, the first scanning module may be disposed on the image-focal plane of the collimating lens.

It should be noted that the transmit module provided above is merely an example, and a possible structure of the transmit module is not limited in this application. In addition, in this application, the transmit module may transmit one beam of the signal light at a time, or may transmit a plurality of beams of the signal light at a time. This is not limited in this application.

3. Receive module

In a possible implementation, the receive module is configured to propagate the received first echo signal to the currently non-gated first area in the detection module or the area outside the detection module. Further, the receive module is further configured to propagate the received second echo signal to the currently gated second area in the detection module.

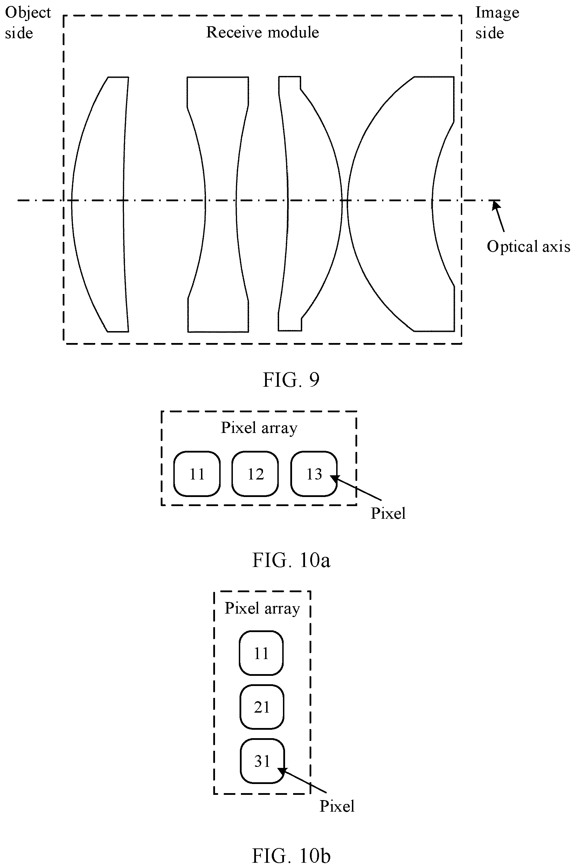

FIG. 9 is a schematic diagram of a structure of the receive module according to this application. The receive module includes at least one receive mirror. The receive mirror may, for example, be a lens. In FIG. 9, an example in which the receive module includes four lenses is used. The optical axis of the receive module is a straight line that passes through a sphere center of each lens shown in FIG. 9.

It should be noted that the receive module may be rotatively symmetrical about the optical axis. For example, the receive mirror in the receive module may be a single spherical lens, or may be a combination of a plurality of spherical lenses (for example, a combination of concave lenses, a combination of convex lenses, or a combination of a convex lens and a concave lens). Alternatively, the receive module may be non-rotatively symmetrical. For example, the receive mirror in the receive module may be a single aspherical lens, or may be a combination of a plurality of aspherical lenses. A combination of the plurality of spherical lenses and/or aspherical lenses helps improve imaging quality of the detection system and reduce aberration of an optical imaging system. It should be understood that the convex lens and the concave lens have a plurality of different types. For example, the convex lens includes a double convex lens, a flat convex lens, and a concave-convex lens, and the concave lens includes a double concave lens, a flat concave lens, and the concave-convex lens.

In a possible implementation, the receive mirror in the receive module may be made of an optical material such as glass, resin, crystal, or the like. When the receive mirror is made of resin, mass of the detection system is reduced. When the receive mirror is made of glass, imaging quality of the detection system is further improved. Further, to effectively suppress temperature drift, the receive module includes at least one receive mirror made of a glass material.

In this application, the detection system may further include the detection module and may further include a processing control module. The following describes the detection module and the processing control module by using examples.

3. Detection module

In a possible implementation, the detection module is configured to perform optical-to-electrical conversion on the second echo signal to obtain an electrical signal used to determine association information of the second target. The association information of the second target includes but is not limited to distance information of the second target, an orientation of the second target, a speed of the second target, and/or grayscale information of the second target.

In a possible implementation, the detection module includes a pixel array. It should be noted that the pixel array is in a one-to-one correspondence with the light source array.

The following shows an example of a schematic diagram of a structure of three possible pixel arrays.

In a structure A, the pixel array includes one row and L columns of pixels, and L is an integer greater than 1.

FIG. 10a is a schematic diagram of a structure of a pixel array according to this application. In FIG. 10a, L=3 is used as an example, that is, the pixel array includes 1×3 pixels. Specifically, the one-row and three-column pixels may be gated at a time. An area corresponding to the gated one-row and three-column pixels is a second area of the detection module, and another area outside the gated one-row and three-column pixels in the detection module is a first area of the detection module. Further, the first area of the detection module is configured to perform optical-to-electrical conversion on the received second echo signal, to obtain the electrical signal used to determine the association information of the second target.

If the light source array is of the foregoing structure 1, correspondingly, the pixel array is of the structure A.

In a structure B, the pixel array includes K rows and one column of pixels, and K is an integer greater than 1.

FIG. 10b is a schematic diagram of a structure of another pixel array according to this application. In FIG. 10b, K=3 is used as an example, that is, the pixel array includes 3×1 pixels. Specifically, the three-row and one-column of pixels may be gated at a time. An area corresponding to the gated three-row and one-column pixels is the second area of the detection module, and another area outside the gated three-row and one-column pixels in the detection module is the first area of the detection module.

If the light source array is of the foregoing structure 2, correspondingly, the pixel array is of the structure B.

In a structure C, the pixel array includes M rows and N columns, and both M and N are integers greater than 1.

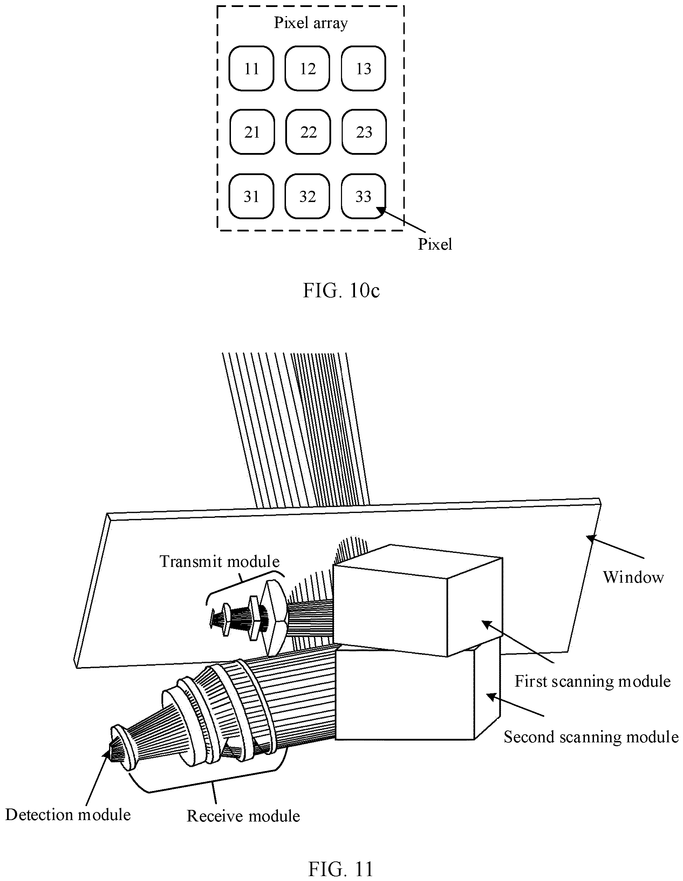

FIG. 10c is a schematic diagram of a structure of still another pixel array according to this application. In FIG. 10c, M=3 and N=3 are used as an example, that is, the pixel array includes 3×3 pixels. In a possible implementation, the pixel array may gate pixels in a time division manner by row or in a time division manner by column, and a row of pixels gated by row or a column of pixels gated by column is referred to as the first area. Gating pixels in a time division by row means gating at least one row of pixels in the pixel array at a same moment. Gating pixels in a time division by column means gating at least one column of pixels in the pixel array at a same moment. In other words, the row of pixels gated by row may be one row of pixels or may be a plurality of rows of pixels, and the column of pixels gated by column may be one column of pixels or may be a plurality of columns of pixels. This is not limited in this application. The pixel array is in a one-to-one correspondence with the light source array shown in FIG. 6c. Specifically, for example, one row of pixels is gated at a same moment. A first row of pixels in the pixel array and the first row of light sources in the light source array are gated at a first moment, a second row of pixels in the pixel array and the second row of light sources in the light source array are gated at a second moment, and a third row of pixels in the pixel array and the third row of light sources in the light source array are gated at a third moment. Alternatively, the light sources in the light source array may be gated in a time division manner by row, and only a specific row of pixels in the pixel array is gated.

For example, one column of pixels is gated at a same moment. A first column of pixels in the pixel array and the first column of light sources in the light source array are gated at a first moment, a second column of pixels in the pixel array and the second column of light sources in the light source array are gated at a second moment, and a third column of pixels in the pixel array and the third column of light sources in the light source array are gated at a third moment. Alternatively, the light sources in the light source array may be gated in a time division manner by column, and only a specific column of pixels in the pixel array is gated.

It should be noted that the foregoing provided shape of the pixels is merely an example, and this is not limited in this application. For example, the shape of the pixels may be a direction, an ellipse, or another possible shape.

Based on the foregoing structure A or structure C, the pixels are gated by column, that is, the detection system scans by column. The first angle is greater than or equal to a first angular resolution of the detection system, and the first angular resolution is an angular resolution of the detection system in a direction corresponding to a column of the pixel array. The direction corresponding to the column of the pixel array is a vertical direction, and the angular resolution of the detection system in the direction may also be referred to as a vertical angular resolution. The first angle is set to be greater than or equal to the first angular resolution in the direction corresponding to the column of the pixel array of the detection system, so that it can be ensured to a greatest extent that the receive module transmits the first echo signal to the currently non-gated first area in the pixel array, to minimize the first echo signal entering the currently gated second area in the pixel array. This can eliminate impact of the false ghost image caused by the first echo signal.

Based on the foregoing structure B or structure C, the light sources are gated by row, that is, the detection system scans by row. The first angle is greater than or equal to a second angular resolution of the detection system, and the second angular resolution is an angular resolution of the detection system in a direction corresponding to a row of the pixel array. The direction corresponding to the row of the pixel array is a horizontal direction, and the angular resolution of the detection system in the direction may also be referred to as a horizontal angular resolution. The first angle is set to be greater than or equal to the second angular resolution in the direction corresponding to the row of the pixel row of the detection system, so that it can be ensured to a greatest extent that the receive module transmits the first echo signal to the currently non-gated first area in the pixel row, to reduce the first echo signal entering the currently gated second area in the pixel array. This can eliminate impact of the false ghost image caused by the first echo signal to a greatest extent.

4. Processing control module

In a possible implementation, the processing control module is configured to plan a driving path based on the determined association information of the second target, for example, avoiding an obstacle on the planned driving path.

Further, optionally, the processing control module may be further configured to control rotation of the first scanning module and the second scanning module, and may be further configured to: control the first scanning module to synchronize with the light source component, control the second scanning module to synchronize with the pixel array, and the like.

In a possible implementation, the processing control module may include a processing unit and a control unit. The processing unit may be a general-purpose processor, a field programmable gate array (field programmable gate array, FPGA), a digital signal processor (digital signal processor, DSP) circuit, an application specific integrated circuit (application specific integrated circuit, ASIC), or another programmable logic device. The control unit includes drivers of the first scanning module and the second scanning module, a driver of a light source module, a driver of the detection module, and the like. These drivers may be integrated together, or may be separated.

For example, the processing unit may send a control signal to each driver of the control unit. For example, based on the foregoing case 1, the processing unit may send a first control signal to drivers that drive the first scanning module and the second scanning module to rotate, to control the first scanning module and the second scanning module to rotate. Based on the foregoing case 2, the processing unit may send a second control signal to the driver that drives the first scanning module to rotate, to control the first scanning module to rotate; and may send a third control signal to the driver that drives the second scanning module to rotate, to control the second scanning module to rotate. Further, the processing unit may further send a control signal to the driver of the detection module, so that the driver of the detection module controls running of the detection module; and may further send a control signal to the driver of the light source component, so that the driver of the light source component controls running of the light source component; and the like.

Based on the foregoing content, the following provides a specific structure of the foregoing detection system with reference to a specific hardware structure, to facilitate further understanding of the foregoing detection system.

FIG. 11 is a schematic diagram of an architecture of another detection system according to this application. The detection system may include a transmit module, a receive module, a first scanning module, a second scanning module, and a window. In this example, the first scanning module and the second scanning module share a first scanning axis. An included angle between a first normal vector $\overrightarrow{n_1}$ of a first reflective surface of the first scanning module and a second normal vector $\overrightarrow{n_2}$ of a second reflective surface of the second scanning module is a first angle $\theta$ greater than 0 degrees, and an included angle between an optical axis of the transmit module and an optical axis of the receive module is a second angle $\Phi$ greater than 0 degrees. For detailed descriptions of the transmit module, the receive module, the first scanning module, the second scanning module, and the window, refer to the foregoing related descriptions. Details are not described herein again.

Based on the foregoing detection system shown in FIG. 11, the first target reflects received signal light to obtain a first echo signal, and the first echo signal is reflected by the second scanning module to the receive module (as shown in FIG. 12a below) or an area outside the receive module (as shown in FIG. 12b below). The first echo signal reflected to the area outside the receive module does not enter the detection module. This can eliminate the false ghost image incorrectly detected by the detection system caused by the first target. For the first echo signal reflected to the receive module, because the included angle between the first normal vector of the first reflective surface of the first scanning module and the second normal vector of the second reflective surface of the second scanning module is set to be the first angle, and the included angle between the optical axis of the transmit module and the optical axis of the receive module is the second angle, the first echo signal received by the receive module is no longer parallel to the signal light transmitted by the transmit module. Further, the first echo signal received by the receive module is no longer transmitted to the currently gated area in the detection module. If the first angle is large, the first echo signal received by the receive module may even be transmitted to the area outside the detection module. This can also eliminate a false ghost image of the first target incorrectly detected by the detection system caused by the first target. Generally, because the first echo signal is reflected by the second scanning module to the receive module not for the first time, an optical propagation path of the first echo signal is longer than an optical propagation path of the second echo signal. In addition, after the first echo signal passes through the long optical propagation path, energy of the first echo signal is still strong, and the first echo signal can still be detected by the detection module.

For the foregoing beneficial effects, the following describes in detail a reason for eliminating the false ghost image with reference to a specific optical path.

FIG. 12a is a schematic diagram of an optical path in the detection system according to this application. At a specific scanning angle, the signal light transmitted by the transmit module is transmitted to the reflective surface of the first scanning module, and is reflected to the window by the reflective surface of the first scanning module for the first time. Most of the signal light passes through the window to the detection area, to scan the detection area. If the second target exists in the detection area, the second target may reflect the signal light to obtain the second echo signal. The second echo signal is reflected to the receive module by the second scanning module, propagated by the receive module, and transmitted to the currently gated second area in the detection module. The currently gated second area in the detection module performs optical-to-electrical conversion on the received second echo signal, to obtain the association information of the second target. However, because the signal light is unlikely to all pass through the window, a small part of the signal light is reflected back to the first scanning module by the window, is reflected again to the window by the reflective surface of the first scanning module, and then passes through the window. If the signal light that passes again is transmitted to the first target, because the first target has high reflectivity, the first target reflects the signal light to obtain the first echo signal with high strength. The first echo signal passes through the window to the second scanning module, and is reflected again to the window by the reflective surface of the second scanning module. A part of the first echo signal is reflected back to the second scanning module again by the window, and cannot enter the receive module after being reflected by the reflective surface of the second scanning module. Therefore, the optical first echo signal reflected by the first target does not affect the detection module. This can eliminate the false ghost image incorrectly detected by the detection system. It should be understood that a larger first angle indicates a stronger capability of suppressing the false ghost image.

FIG. 12b is a schematic diagram of another optical path in the detection system according to this application. At a specific scanning angle, the signal light transmitted by the transmit module is transmitted to the reflective surface of the first scanning module, and is reflected to the window by the reflective surface of the first scanning module for the first time. Most of the signal light passes through the window to the detection area, to scan the detection area. If the second target exists in the detection area, the second target may reflect the signal light to obtain the second echo signal. The second echo signal is reflected to the receive module by the second scanning module, propagated by the receive module, and transmitted to the currently gated second area in the detection module. The currently gated second area in the detection module performs optical-to-electrical conversion on the received second echo signal, to obtain the association information of the second target. However, because the signal light is unlikely to all pass through the window, a small part of the signal light is reflected back to the first scanning module by the window, is reflected again to the window by the reflective surface of the first scanning module, and then passes through the window. If the signal light that passes again is transmitted to the first target, because the first target has high reflectivity, the first target reflects the signal light to obtain the first echo signal with high strength. The first echo signal passes through the window to the second scanning module, and is reflected again to the window by the reflective surface of the second scanning module. A part of the first echo signal is reflected back to the second scanning module again by the window, and is reflected by the reflective surface of the second scanning module to enter the receive module. The first echo signal is propagated to the currently non-gated first area in the detection module by the receive module. In this example, an $i_{th}$ column of pixels are gated. In other words, the first echo signal is propagated to an area outside the $i_{th}$ column in the detection module by the receive module. Because the area outside the $i_{th}$ column is non-gated, the first echo signal reflected by the first target cannot be read by the detection module, and the detection system does not detect the false ghost image of the first target. This can further improve detection accuracy of the detection system.

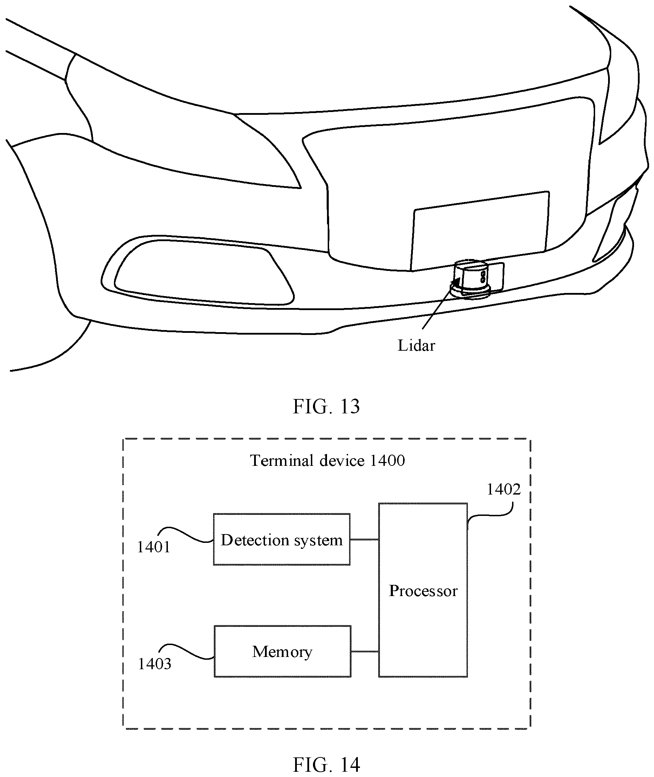

In a possible implementation, the detection system may be, for example, a lidar. The detection system may be installed on a vehicle. Refer to FIG. 13. In this example, a location of the lidar on the vehicle is merely an example. The lidar may alternatively be disposed at any possible location around a vehicle body. This is not limited in this application. Further, optionally, after the detection system determines association information of a target, the detection system may send the association information of the target to the vehicle. The vehicle may plan a driving path based on the determined association information of the target, for example, avoiding an obstacle on the planned driving path.

It should be noted that a shape of the lidar shown in FIG. 13 is merely an example, and the lidar may alternatively be in another appearance shape, for example, a rectangle. This is not specifically limited in this application.

Based on the foregoing described architecture and function principles of the detection system, this application may further provide a terminal device. FIG. 14 is a schematic diagram of a structure of the terminal device according to this application. The terminal device 1400 may include the detection system 1401 in any one of the foregoing embodiments. Further, optionally, the terminal device may further include a processor 1402. The processor 1402 is configured to invoke a program or instructions to control the detection system 1401 to obtain an electrical signal. Further, the processor 1402 may further receive the electrical signal from the detection system 1401, and determine the association information of the second target based on the electrical signal. Optionally, the terminal device may further include a memory 1403, and the memory 1403 is configured to store the program or instructions. Certainly, the terminal device may further include another component, for example, a memory, a wireless control apparatus, or the like.

For the detection system 1401, refer to the foregoing description of the detection system. Details are not described herein again.

The processor 1402 may include one or more processing units. For example, the processor 1402 may include an application processor (application processor, AP), a graphics processing unit (graphics processing unit, GPU), an image signal processor (image signal processor, ISP), a controller, and a digital signal processor (digital signal processor, DSP), and the like. Different processing units may be independent components, or may be integrated into one or more processors.

The memory 1403 includes but is not limited to a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well known in the art. For example, the storage medium is coupled to the processor, so that the processor can read information from the storage medium and write information into the storage medium. Certainly, the storage medium may alternatively be a component of the processor. The processor and the storage medium may be located in an ASIC.

In a possible implementation, the processor 1401 may further plan a driving path of the terminal device based on the determined association information of the target, for example, avoiding an obstacle on the planned driving path.

For example, the terminal device may, for example, be a vehicle (for example, an unmanned vehicle, an intelligent vehicle, an electric vehicle, a digital vehicle, or the like), a robot, a mapping device, an unmanned aerial vehicle, a smart home device (for example, a television, a robot vacuum, a smart desk lamp, an acoustic system, an intelligent lighting system, a household appliance control system, home background music, a home theater system, an intercom system, video surveillance, or the like), an intelligent manufacturing device (for example, an industrial device), an intelligent transportation device (for example, an AGV, an unmanned transportation vehicle, a truck, or the like), an intelligent terminal (for example, a mobile phone, a computer, a tablet computer, a palmtop computer, a desktop computer, a headset, an acoustic device, a wearable device, an in-vehicle device, a virtual reality device, an augmented reality device, or the like), or the like.

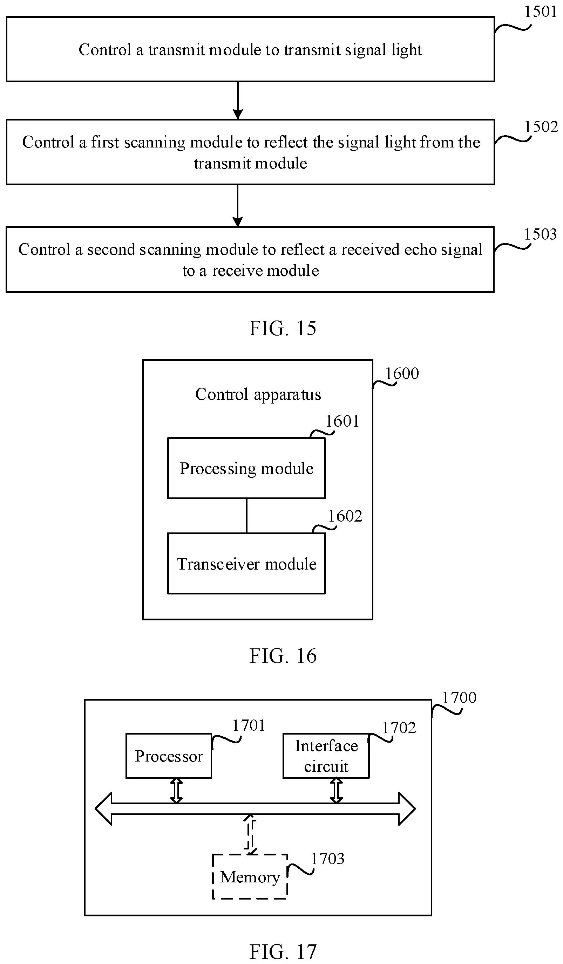

Based on the foregoing content and a same concept, this application provides a detection control method. Refer to the description in FIG. 15. The detection control method may be applied to the detection system shown in any one of the embodiments in FIG. 3a to FIG. 13. It may also be understood that the detection control method may be implemented based on the detection system shown in any one of the embodiments in FIG. 3a to FIG. 13. Alternatively, the detection control method may be applied to the terminal device shown in FIG. 14. It may also be understood that the detection control method may be implemented based on the terminal device shown in FIG. 14.

The following detection method may be performed by the processing control module in the detection system, or may be performed by the processor in the terminal device, or may be performed by another independent control apparatus (for example, a chip). This is not limited in this application. The detection control method includes the following steps.

Step 1501: Control a transmit module to transmit signal light.

In a possible implementation, if the transmit module includes the foregoing light source array, the light source array may be controlled to gate at least one column or at least one row of light sources, and the gated light sources may transmit the signal light. For details, refer to the foregoing descriptions of the structure 1, the structure 2, or the structure 3. Details are not described herein again. For example, a lightening signal may be sent to the light source array, to indicate light sources to be lightened (that is, gated).

If the transmit module includes the Q lasers, at least one of the Q lasers may be controlled to transmit the signal light. For details, refer to the description in FIG. 8. Details are not described herein again.

Step 1502: Control a first scanning module to reflect the signal light from the transmit module.

Based on the foregoing case 1, the first control signal may be sent to the drivers that drive the first scanning module and the second scanning module to rotate, to control the first scanning module and the second scanning module to rotate. Based on the foregoing case 2, the second control signal may be sent to the driver that drives the first scanning module to rotate, to control the first scanning module to rotate, so that the first scanning module is at different scanning angles.

Specifically, the first scanning module may be controlled to be at the different scanning angles at different moments, so that the first scanning module reflects the signal light to a different location in the detection area, to scan the detection area.

Step 1503: Control the second scanning module to reflect a received echo signal to a receive module.

In a possible implementation, the second scanning module may be controlled to reflect a first echo signal to the receive module, or the second scanning module may be controlled to reflect a first echo signal to an area outside the receive module. Further, the second scanning module may be further controlled to reflect a second echo signal to the receive module.

Based on the foregoing case 1, the first control signal may be sent to the drivers that drive the first scanning module and the second scanning module to rotate, to control the first scanning module and the second scanning module to rotate. Based on the foregoing case 2, the third control signal may be sent to the driver that drives the second scanning module to rotate, to control the second scanning module to rotate, so that the second scanning module is at different scanning angles.

For structures of and a location relationship between the first scanning module and the second scanning module in step 1503, refer to the foregoing related descriptions.

If the first scanning module and the second scanning module share a first scanning axis, the first scanning module and the second scanning module may be controlled to rotate synchronously, so that the first scanning module reflects the signal light to the detection area, and the second scanning module reflects the first echo signal to the receive module, or the second scanning module reflects the first echo signal to the area outside the receive module.

If the first scanning module rotates around the second scanning axis, and the second scanning module rotates around the third scanning axis, the first scanning module and the second scanning module may be controlled to rotate around a respective scanning axis, so that an included angle between a first normal vector of a first reflective surface of the first scanning module and a second normal vector of a second reflective surface of the second scanning module is a first angle $\theta$. In this way, the first scanning module reflects the signal light to the detection area, and the second scanning module reflects the first echo signal to the receive module, or the second scanning module reflects the first echo signal to the area outside the receive module.

For more detailed descriptions of step 1501 to step 1503, refer to related descriptions in the embodiments of the detection system. Details are not described herein again.

In a possible implementation, if the detection module is a pixel array, at least one row in the pixel array (corresponding to a light source array gated by row) may be controlled to be gated. Further, the second scanning module may be controlled to reflect the second echo signal to the receive module, and the second echo signal is propagated by the receive module to at least one row of gated pixels in the detection module. Alternatively, at least one column in the pixel array (corresponding to the light source array gated by column) may be controlled to be gated. Further, the second scanning module may be controlled to reflect the second echo signal to the receive module, and the second echo signal is propagated by the receive module to at least one column of gated pixels in the detection module. For example, a gating signal may be sent to the pixel array to indicate data of locations of pixels to be extracted.

It may be understood that to implement functions in the foregoing method embodiments, the control apparatus includes a corresponding hardware structure and/or software module for performing each function. A person skilled in the art should be easily aware that with reference to the modules and method steps in the examples described in embodiments disclosed in this application, this application can be implemented by hardware or a combination of hardware and computer software. Whether a function is performed by hardware or by hardware driven by computer software depends on a particular application scenario and a design constraint of the technical solutions.

Based on the foregoing content and a same concept, FIG. 16 and FIG. 17 are schematic diagrams of structures of possible control apparatuses according to this application. These control apparatuses may be configured to implement functions in FIG. 15 in the foregoing method embodiments, and therefore can also implement beneficial effects of the foregoing method embodiments. In this application, the control apparatus may be the processing control module in the foregoing detection system, may be the processor in the terminal device in FIG. 14, may be another independent control apparatus (for example, a chip), or the like.

As shown in FIG. 16, the control apparatus 1600 includes a processing module 1601, and may further include a transceiver module 1602. The control apparatus 1600 is configured to implement functions in the method embodiments shown in FIG. 15.

When the control apparatus 1600 is configured to implement the functions in the method embodiment shown in FIG. 15, the processing module 1601 is configured to: control the transmit module to transmit signal light, control the first scanning module to reflect the signal light from the transmit module, and control the second scanning module to reflect a received echo signal to the receive module. Further, optionally, the transceiver module 1602 is configured to send the control signal to the transmit module, the first scanning module, the second scanning module, and the like, so that the transmit module transmits the signal light, the first scanning module reflects the signal light from the transmit module, and the second scanning module reflects the received echo signal to the receive module.

It should be understood that the processing module 1601 in this embodiment of this application may be implemented by the processor or a processor-related circuit component, and the transceiver module 1602 may be implemented by a related circuit component such as an interface circuit.

Based on the foregoing content and a same concept, as shown in FIG. 17, this application further provides a control apparatus 1700. The control apparatus 1700 may include a processor 1701, and further, optionally, may further include an interface circuit 1702. The processor 1701 and the interface circuit 1702 are coupled to each other. It may be understood that the interface circuit 1702 may be an input/output interface. Optionally, the control apparatus 1700 may further include a memory 1703, configured to store a computer program or instructions, or the like executed by the processor 1701.

When the control apparatus 1700 is configured to implement the method shown in FIG. 15, the processor 1701 is configured to perform a foregoing function of the processing module 1601, and the interface circuit 1702 is configured to perform a foregoing function of the transceiver module 1602.

Based on the foregoing content and a same concept, this application provides a chip. The chip may include a processor and an interface circuit. Further, optionally, the chip may further include a memory. The processor is configured to execute a computer program or instructions stored in the memory, so that the chip performs the method in any possible implementation in FIG. 15.

It may be understood that the processor in this embodiment of this application may be a central processing unit (central processing unit, CPU), or may be another general-purpose processor, a digital signal processor (digital signal processor, DSP), an application specific integrated circuit (application specific integrated circuit, ASIC), a field programmable gate array (field programmable gate array, FPGA) or another programmable logic device, a transistor logic device, a hardware component, or any combination thereof. The general-purpose processor may be a microprocessor, or may be any regular processor.

The method steps in embodiments of this application may be implemented in a hardware manner, or may be implemented in a manner of executing software instructions by the processor. The software instructions may include a corresponding software module. The software module may be stored in a random access memory (random access memory, RAM), a flash memory, a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), a register, a hard disk, a removable hard disk, a CD-ROM, or any other form of storage medium well-known in the art. For example, the storage medium is coupled to the processor, so that the processor can read information from the storage medium and write information into the storage medium. Certainly, the storage medium may alternatively be a component of the processor. The processor and the storage medium may be located in an ASIC. In addition, the ASIC may be located in the control apparatus. Certainly, the processor and the storage medium may exist in the control apparatus, the terminal device, or the detection system as discrete components.

All or some of the foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer program or instructions are loaded and executed on a computer, all or some of the procedures or functions in embodiments of this application are executed. The computer may be a general-purpose computer, a dedicated computer, a computer network, a control apparatus, user equipment, or another programmable apparatus. The computer program or instructions may be stored in a computer-readable storage medium, or may be transmitted from one computer-readable storage medium to another computer-readable storage medium. For example, the computer program or instructions may be transmitted from one website, computer, server, or data center to another website, computer, server, or data center in a wired manner or in a wireless manner. The computer-readable storage medium may be any usable medium accessible by a computer, or a data storage device, for example, a server, a data center, and the like, integrating one or more usable media. The usable medium may be a magnetic medium, for example, a floppy disk, a hard disk, or a magnetic tape, may be an optical medium, for example, a digital video disc

(digital video disc, DVD), or may be a semiconductor medium, for example, a solid state drive (solid state drive, SSD).

In embodiments of this application, if there are no special statements and logic conflicts, terms and/or descriptions between different embodiments are consistent and may be mutually referenced, and technical features in different embodiments may be combined based on an internal logical relationship thereof, to form a new embodiment.

In this application, "evenly" does not mean absolutely evenly, and a specific engineering error may be allowed. "Vertical" does not mean absolute vertical, but a specific engineering error may be allowed. "At least one" means one or more, and "a plurality of" means two or more. The term "and/or" describes an association relationship between associated objects, and indicates that three relationships may exist. For example, A and/or B may indicate the following three cases: Only A exists, both A and B exist, and only B exists, where A and B may be singular or plural. "At least one of the following items (pieces)" or a similar expression thereof means any combination of these items, including any combination of a singular item (piece) or plural items (pieces). For example, at least one of a, b, or c may indicate a, b, c, a and b, a and c, b and c, or a, b, and c, where a, b, and c may be singular or plural. In the text descriptions of this application, the character "/" usually indicates an "or" relationship between the associated objects. In a formula in this application, the character "/" indicates a "division" relationship between the associated objects. In addition, in this application, the word "example" is used to represent giving an example, an illustration, or a description. Any embodiment or design solution described as an "example" in this application should not be explained as being more preferred or having more advantages than another embodiment or design solution. Alternatively, this may be understood as that the term "example" is used to present a concept in a specific manner, and does not constitute a limitation on this application.

It can be understood that various numbers in this application are merely used for differentiation for ease of description, and are not intended to limit the scope of embodiments of this application. The sequence numbers of the foregoing processes do not mean execution sequences. The execution sequences of the processes should be determined based on functions and internal logic of the processes. The terms "first" and "second" and similar expressions are intended to distinguish between similar objects but do not necessarily indicate a specific order or sequence. In addition, terms "comprise", "include", and any variants thereof are intended to cover a non-exclusive inclusion. For example, a series of steps or units are included. A method, a system, a product, or a device is not necessarily limited to clearly listed steps or units, but may include other steps or units that are not clearly listed and that are inherent to the process, the method, the product, or the device.

Although this application is described with reference to specific features and embodiments thereof, it is clear that various modifications and combinations may be made to them without departing from the spirit and scope of this application. Correspondingly, the specification and accompanying drawings are merely examples for description of the solutions defined by the appended claims, and are considered as any of or all modifications, variations, combinations or equivalents that cover the scope of this application.

It is clear that a person skilled in the art can make various modifications and variations to this application without departing from the spirit and the scope of the present invention. This application is intended to cover these modifications and variations of embodiments of this application provided that they fall within the scope of the claims of this application and their equivalent technologies.

## Claims

1. A detection system, comprising a transmit module, a receive module, a first scanning module, and a second scanning module, wherein

   the transmit module is configured to transmit signal light;
   the first scanning module is configured to reflect the signal light from the transmit module;
   the second scanning module is configured to reflect a received echo signal to the receive module, and the echo signal comprises reflected light obtained by reflecting the signal light by at least one target;
   the receive module is configured to receive the echo signal; and
   an included angle between a first normal vector of a first reflective surface of the first scanning module and a second normal vector of a second reflective surface of the second scanning module is a first angle, the first reflective surface and the second reflective surface are adjacent reflective surfaces, an included angle between an optical axis of the transmit module and an optical axis of the receive module is a second angle, and both the first angle and the second angle are greater than 0 degrees.

2. The system according to claim 1, wherein the detection system further comprises a detection module, and the echo signal comprises a first echo signal;

   the second scanning module is configured to reflect the first echo signal to the receive module, or is configured to reflect the first echo signal to an area outside the receive module, and the first echo signal is reflected light obtained by reflecting the signal light by a first target in the at least one target; and
   the receive module is configured to propagate the first echo signal to a first area of the detection module or an area outside the detection module, and the first area is a currently non-gated area in the detection module.

3. The system according to claim 1 or 2, wherein the detection system further comprises the detection module, and the echo signal comprises a second echo signal;

   the second scanning module is configured to reflect the second echo signal to the receive module, and the second echo signal is reflected light obtained by reflecting the signal light by a second target that is in the at least one target and that is located in a detection area;

the receive module is configured to propagate the second echo signal to a second area of the detection module, and the second area is a currently gated area in the detection module; and

the detection module is configured to perform optical-to-electrical conversion on the second echo signal to obtain an electrical signal, and the electrical signal is used to determine association information of the second target.

4. The system according to any one of claims 1 to 3, wherein the first scanning module and the second scanning module share a first scanning axis; and

the first reflective surface and the second reflective surface are adjacent in a direction parallel to the first scanning axis.

5. The system according to any one of claims 1 to 3, wherein a scanning axis of the first scanning module is a second scanning axis, a scanning axis of the second scanning module is a third scanning axis, and a direction of the second scanning axis is parallel to a direction of the third scanning axis, or an extension line of the second scanning axis coincides with an extension line of the third scanning axis; and

the first reflective surface and the second reflective surface are adjacent in a direction parallel to the second scanning axis or in a direction parallel to the third scanning axis.

6. The system according to any one of claims 1 to 5, wherein the second angle is twice the first angle.

7. The system according to any one of claims 1 to 6, wherein the first scanning module comprises any one of the following: a rotation mirror, a swing mirror, and a micro electro-mechanical system MEMS mirror; and/or

the second scanning module comprises any one of the following: a mirror, a swing mirror, and a micro electro-mechanical system MEMS mirror.

8. The system according to any one of claims 2 to 7, wherein the transmit module comprises a light source array, and the detection module comprises a pixel array; and

the light source array gates light sources in a time division manner by column, and the pixel array gates pixels in a time division manner by column.

9. The system according to claim 8, wherein the first area of the detection module is at least one column of non-gated pixels, and the second area is at least one column of gated pixels.

10. The system according to claim 8 or 9, wherein the first angle is greater than or equal to a first angular resolution of the detection system, and the first angular resolution is an angular resolution of the detection system in a direction corresponding to a column of the pixel array.

11. The system according to any one of claims 2 to 7, wherein the transmit module comprises a light source array, and the detection module comprises a pixel array; and

the light source array gates light sources in a time division manner by row, and the pixel array gates pixels in a time division manner by row.

12. The system according to claim 11, wherein the first area of the detection module is at least one row of non-gated pixels, and the second area is at least one row of gated pixels.

13. The system according to claim 11 or 12, wherein the first angle is greater than or equal to a second angular resolution of the detection system, and the second angular resolution is an angular resolution of the detection system in a direction corresponding to a row of the pixel array.

14. The system according to any one of claims 3 to 13, wherein the detection system further comprises a processing control module; and

the processing control module is configured to: receive the electrical signal from the detection module, and determine the association information of the second target based on the electrical signal.

15. A terminal device, comprising the detection system according to any one of claims 1 to 14.

16. A detection control method, wherein the method comprises:

controlling a transmit module to transmit signal light;

controlling a first scanning module to reflect the signal light from the transmit module; and

controlling a second scanning module to reflect a received echo signal to a receive module, wherein the echo signal comprises reflected light obtained by reflecting the signal light by at least one target; and

an included angle between a first normal vector of a first reflective surface of the first scanning module and a second normal vector of a second reflective surface of the second scanning module is a first angle, the first reflective surface and the second reflective surface are adjacent reflective surfaces, an included angle between an optical axis of the transmit module and an optical axis of the receive module is a second angle, and both the first angle and the second angle are greater than 0 degrees.

17. The method according to claim 16, wherein the echo signal comprises a first echo signal; and

the controlling a second scanning module to reflect a received echo signal to a receive module comprises:

controlling the second scanning module to reflect the first echo signal to the receive module, or controlling the second scanning module to reflect the first echo signal to an area outside the receive module, wherein the first echo signal is reflected light that is of the signal light and that is reflected by a first target in the at least one target, the first echo signal is propagated to a first area of a detection module by the receive module, and the first area is a currently non-gated area in the detection module.

18. The method according to claim 16 or 17, wherein the echo signal comprises a second echo signal;

the controlling a second scanning module to reflect a received echo signal to a receive module comprises:

controlling the second scanning module to reflect the second echo signal to the receive module, wherein the second echo signal is reflected light obtained by reflecting the signal light by a second target that is in the at least one target and that is located in a detection area; and

the method further comprises:

controlling the detection module to gate a second area, wherein the gated second area is used to perform optical-to-electrical conversion on the received second echo signal, to obtain an electrical signal, and the electrical signal is used to determine association information of the second target.

19. The method according to claim 18, wherein the detection module comprises a pixel array; and

the controlling the detection module to gate a second area comprises:

controlling the pixel array to gate the second area by column.

20. The method according to claim 19, wherein the transmit module comprises a light source array; and

the controlling a transmit module to transmit signal light comprises:

controlling the light source array to gate light sources in a time division manner by column.

21. The method according to claim 18, wherein the detection module comprises a pixel array; and

the controlling the detection module to gate a second area comprises:

controlling the pixel array to gate the second area by row.

22. The method according to claim 20, wherein the transmit module comprises the light source array; and

the controlling a transmit module to transmit signal light comprises:

controlling the light source array to gate light sources in a time division manner by row.

23. The method according to any one of claims 18 to 22, wherein the method further comprises:

determining the association information of the second target based on the electrical signal.

24. A computer-readable storage medium, wherein the computer-readable storage medium stores a computer program or instructions, and when the computer program or the instructions are executed by a control apparatus, the control apparatus is enabled to perform the method according to any one of claims 16 to 23.

25. A computer program product, wherein the computer program product comprises a computer program or instructions, and when the computer program or the instructions are executed by a control apparatus, the control apparatus is enabled to perform the method according to any one of claims 16 to 23.

FIG. 1a

FIG. 1b

First target

First target

First target

Detection area

FIG. 2

Detection system

| Transmit module 301 | Signal light → | First scanning module 303 | Signal light → |

Echo signal

| Receive module 302 | ← | Second scanning module 304 | ← Echo signal |

FIG. 3a

First reflective surface

First scanning module 303

Second scanning module 304

$\vec{n_2}$

$\vec{n_1}$

θ

Second reflective surface

FIG. 3b

Receive module 302

Transmit module 301

Optical axis

Φ

Optical axis

FIG. 3c

FIG. 4a

FIG. 4b

FIG. 4c

FIG. 5a

Second
scanning axis

First scanning module

A₄    A₃

A₁    A₂

Third scanning
axis

Second scanning module

B₃

B₄    B₁    B₂

FIG. 5b

Second scanning axis

First scanning module

A₄  A₃

A₁  A₂

Second scanning module

B₃

B₄  B₂

B₁

Third scanning axis

FIG. 5c

Light source array

1   2   3

Light source

FIG. 6a

FIG. 6b

FIG. 6c

Transmit mirror group

Optical axis

Concave-convex lens 1    Concave-convex lens 2    Double convex lens 3

FIG. 7

Light beam adjustment component

Laser — Signal light → Beam splitter

Fibers

Collimator

Object-focal plane

First scanning module

Image-focal plane

FIG. 8

Object side
Image side

Receive module

Optical axis

FIG. 9

Pixel array

11  12  13

Pixel

FIG. 10a

Pixel array

11

21

31

Pixel

FIG. 10b

Pixel array

11 12 13

21 22 23

31 32 33

Pixel

FIG. 10c

Transmit module

Window

First scanning module

Second scanning module

Detection module    Receive module

FIG. 11

First target

Second echo signal

Window

First echo signal

Transmit
module

Second echo
signal

First scanning
module

Second
scanning
module

Signal light

Receive module

FIG. 12a

First target

Second echo signal

Window

First echo signal

Transmit module

First scanning
module

Second
scanning
module

Detection
module

Receive
module

FIG. 12b

FIG. 13

FIG. 14

1501

Control a transmit module to transmit signal light

1502

Control a first scanning module to reflect the signal light from the transmit module

1503

Control a second scanning module to reflect a received echo signal to a receive module

FIG. 15

1600

Control apparatus

1601

Processing module

1602

Transceiver module

FIG. 16

1700

1701

Processor

1702

Interface circuit

1703

Memory

FIG. 17

## INTERNATIONAL SEARCH REPORT

| International application No. |
|---|
| **PCT/CN2021/113080** |

**A. CLASSIFICATION OF SUBJECT MATTER**

G01S 7/481(2006.01)i; G01S 17/88(2006.01)i; G02B 26/10(2006.01)i

According to International Patent Classification (IPC) or to both national classification and IPC

**B. FIELDS SEARCHED**

Minimum documentation searched (classification system followed by classification symbols)

G01S; G02B 26; H01S

Documentation searched other than minimum documentation to the extent that such documents are included in the fields searched

Electronic data base consulted during the international search (name of data base and, where practicable, search terms used)

CNABS, CNTXT, WPABSC, ENTXTC, VEN, USTXT: 扫描, 偏转, 旋转, 转镜, 微镜, 振镜, 摆镜, MEMS, 两, 多个, 单独, 各自, 又一个, 再一个, 第二, 俩, 反射, 虚假, 虚像, 假象, 鬼像, 角, 倾斜, 不平行, 选通, 像素, 阵列, scan+, rotat+, deflect+, galvanometer, vibrat+, shak+, mirror?, micro-, two, plural, multi, second, reflect+, angle, incline

**C. DOCUMENTS CONSIDERED TO BE RELEVANT**

| Category* | Citation of document, with indication, where appropriate, of the relevant passages | Relevant to claim No. |
|---|---|---|
| X | JP H09184879 A (NISSAN MOTOR CO., LTD.) 15 July 1997 (1997-07-15) description, paragraphs [0022]-[0029], and figures 1-10 | 1, 3-7, 14-16, 18-25 |
| A | CN 113030913 A (JUEXIN ELECTRONICS (WUXI) CO., LTD.) 25 June 2021 (2021-06-25) entire document | 1-25 |
| A | CN 207336754 U (BEIJING WANJI TECHNOLOGY CO., LTD.) 08 May 2018 (2018-05-08) entire document | 1-25 |
| A | CN 110007312 A (SUTENG INNOVATION TECHNOLOGY CO., LTD.) 12 July 2019 (2019-07-12) entire document | 1-25 |
| A | CN 112698308 A (SUZHOU INSTITUTE OF NANO-TECH AND NANO-BIONICS, CHINESE ACADEMY OF SCIENCES) 23 April 2021 (2021-04-23) 49, 55, 51 | 1-25 |
| A | CN 106443635 A (SHANGHAI BOWEI SENSING TECHNOLOGY CO., LTD.) 22 February 2017 (2017-02-22) entire document | 1-25 |

☐ Further documents are listed in the continuation of Box C.  ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **15 May 2022** | **23 May 2022** |

| Name and mailing address of the ISA/CN | Authorized officer |
|---|---|
| **China National Intellectual Property Administration (ISA/ CN)** <br> **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2021/113080**

| Patent document cited in search report | | | Publication date (day/month/year) | Patent family member(s) | | | Publication date (day/month/year) |
|---|---|---|---|---|---|---|---|
| JP | H09184879 | A | 15 July 1997 | JP | 3401777 | B2 | 28 April 2003 |
| CN | 113030913 | A | 25 June 2021 | None | | | |
| CN | 207336754 | U | 08 May 2018 | None | | | |
| CN | 110007312 | A | 12 July 2019 | CN | 110007312 | B | 12 April 2022 |
| CN | 112698308 | A | 23 April 2021 | None | | | |
| CN | 106443635 | A | 22 February 2017 | None | | | |

Form PCT/ISA/210 (patent family annex) (January 2015)